# EUROPÄISCHE PATENTANMELDUNG

(11) **EP 4 711 205 A1**
(43) Veröffentlichungstag der Anmeldung: **18.03.2026**
(21) Anmeldenummer: 25198434.0
(22) Anmeldetag: 27.08.2025
(51) Int. Cl.: B60Q 3/80, H05B 47/175

(54) **KRAFTFAHRZEUG AUFWEISEND EINE AMBIENTE-BELEUCHTUNGSEINRICHTUNG MIT ZWEI BEDIENEINRICHTUNGEN**

(30) Priorität: 13.09.2024 DE 102024126472
(71) Anmelder: MAN Truck & Bus SE, 80995 München (DE)
(72) Erfinder: Voigt, Sebastian, 80995 München (DE); Röger, Thomas, 80995 München (DE)
(74) Vertreter: v. Bezold & Partner Patentanwälte - PartG mbB

(57) **Zusammenfassung**

Die Erfindung betrifft ein Kraftfahrzeug (10), aufweisend zumindest eine Ambiente-Beleuchtungseinrichtung (12a, 12b, 12c, 12d, 12e, 12f), eine erste Bedieneinrichtung (14) zur Bedienung der zumindest einen Ambiente-Beleuchtungseinrichtung (12a, 12b, 12c, 12d, 12e, 12f), wobei die erste Bedieneinrichtung (14) in dem Kraftfahrzeug (10) fest verbaut ist, und eine zweite Bedieneinrichtung (16) zur Bedienung der zumindest einen Ambiente-Beleuchtungseinrichtung (12a, 12b, 12c, 12d, 12e, 12f), wobei die zweite Bedieneinrichtung (16) ein, vorzugsweise tragbares, Mobilgerät, vorzugsweise ein Mobiltelefon, ein Smartphone oder ein Tablet-PC, ist.

## Beschreibung

Die Erfindung betrifft ein Kraftfahrzeug, vorzugsweise ein Nutzfahrzeug, wie z. B. einen Lastkraftwagen oder eine Sattelzugmaschine.

Im Fahrzeugbereich ist es bekannt, den Komfort bzw. das Wohlbefinden für die Insassen mittels Ambiente-Beleuchtung zu steigern. Hierzu wird mittels entsprechender meist farbig leuchtender Ambiente-Beleuchtungseinrichtungen eine indirekte Beleuchtung bzw. eine angenehme Lichtstimmung im Fahrzeuginnenraum erzeugt und/oder Konturen von Interiorkomponenten des Fahrzeugs hervorgehoben. Im Gegensatz zu anderen Lichtquellen im Fahrzeug, wie z. B. Kartenlichtern, dienen die Ambiente-Beleuchtungseinrichtungen somit vorrangig nicht zur direkten Beleuchtung bestimmter Raumbereiche, um dadurch die Sichtbarkeit in diesem Raumbereich befindlicher Gegenstände zu verbessern.

Die Steigerung des Wohlbefindens der Insassen durch eine Ambiente-Beleuchtung ist insbesondere im Nutzfahrzeugbereich relevant, da dort der Fahrer oftmals einen Großteil seiner Arbeitszeit und Freizeit im Fahrzeug verbringt, bspw. im Fahrzeug schläft, liest oder isst. Entsprechend besteht hier ein Bedarf, die Lichtstimmung im Fahrzeug möglichst einfach und individuell anzupassen. Bei der Bedienung der Ambiente-Beleuchtung besteht in diesem Zusammenhang oftmals die Schwierigkeit, dass sich der Fahrer nicht ausschließlich an einem Ort im Fahrzeug aufhält, bspw. auf dem Fahrersitz sitzend isst und zum Schlafen auf in einen hinteren Bereich des Fahrzeugs wechselt, in dem eine Liegefläche angeordnet ist. Bisherige Bedienkonzepte mit einer zentralen Bedieneinheit ermöglichen somit oftmals nur eine in der Praxis umständliche Handhabung, bei der sich der Fahrer zunächst zum entsprechenden Bedienelement bewegen muss.

Aufgabe der Erfindung ist es, eine Lösung bereitzustellen, mittels derer eine einfache und komfortable Bedienung einer Ambiente-Beleuchtungseinrichtung eines Kraftfahrzeugs ermöglicht wird. Vorzugsweise besteht die Aufgabe der Erfindung darin, eine Lösung bereitzustellen, mittels derer eine Ambiente-Beleuchtungseinrichtung bedarfsgerecht und von jeder Aufenthaltsposition im Kraftfahrzeug bedient werden kann.

Diese Aufgaben können mit den Merkmalen des unabhängigen Anspruchs gelöst werden. Vorteilhafte Ausführungsformen und Anwendungen der Erfindung sind Gegenstand der abhängigen Ansprüche und werden in der nachfolgenden Beschreibung unter teilweiser Bezugnahme auf die Figuren näher erläutert.

Gemäß einem ersten unabhängigen Aspekt der vorliegenden Offenbarung wird ein Kraftfahrzeug, vorzugsweise ein Nutzfahrzeug (z. B. ein Lastkraftwagen oder ein Sattelzugfahrzeug), bereitgestellt.

Das Kraftfahrzeug weist zumindest eine (z. B. Innenraum-)Ambiente-Beleuchtungseinrichtung auf, die bevorzugt in verschiedenenfarbig leuchten und/oder Licht verschiedener Farben emittieren kann. Lediglich beispielhaft kann die zumindest eine Ambiente-Beleuchtungseinrichtung eine Dachhimmel-, Fußraum-, Seitentür- und/oder Zigarettenanzünder-Beleuchtungseinrichtung aufweisen. Bevorzugt dient die zumindest eine Ambiente-Beleuchtungseinrichtung zur indirekten Beleuchtung eines Innenraums des Kraftfahrzeugs und/oder zur Hervorhebung einer Kontur wenigstens einer Interiorkomponente des Kraftfahrzeugs, z. B. einer Dashboardleiste einer Instrumententafel des Kraftfahrzeugs.

Das Kraftfahrzeug weist ferner eine Bedieneinrichtung zur Bedienung der zumindest einen Ambiente-Beleuchtungseinrichtung auf, die zur besseren Unterscheidbarkeit als erste Bedieneinrichtung bezeichnet werden kann. Die erste Bedieneinrichtung ist dabei im Kraftfahrzeug (z. B. in einer Instrumententafel des Kraftfahrzeugs) verbaut (z. B. fest verbaut). Beispielsweise kann die erste Bedieneinrichtung mit einer Fahrzeugkomponente des Kraftfahrzeugs verschraubt, verklebt und/oder verrastet sein. Bevorzugt ist die erste Bedieneinrichtung mittels einer Kabelverbindung mit einer Steuereinrichtung des Kraftfahrzeugs verbunden. Entsprechend soll es sich bei der ersten Bedieneinrichtung vorzugsweise nicht um eine mobile Bedieneinrichtung handeln.

Das Kraftfahrzeug weist ferner eine weitere Bedieneinrichtung zur Bedienung der zumindest einen Ambiente-Beleuchtungseinrichtung auf, die zur besseren Unterscheidbarkeit als zweite Bedieneinrichtung bezeichnet werden kann. Entsprechend kann die zumindest eine Ambiente-Beleuchtungseinrichtung sowohl mittels der ersten Bedieneinrichtung als auch mittels der zweiten Bedieneinrichtung bedienbar sein. Die zweite Bedieneinrichtung ist dabei ein (z. B. tragbares) Mobilgerät, vorzugsweise ein Mobiltelefon, ein Smartphone oder ein Tablet-PC. Beispielsweise kann die zweite Bedieneinrichtung bzw. das Mobilgerät von einem Insassen des Kraftfahrzeugs innerhalb und/oder außerhalb des Kraftfahrzeugs herumtragbar sein und/oder nicht über eine Kabelverbindung mit dem Kraftfahrzeug verbunden sein. Bevorzugt wird mittels eines Anwendungsprogramms (z. B. einer "App") eine Bedienumgebung mit mehreren (z. B. virtuelle) Bedienelementen auf dem Mobilgerät bereitgestellt.

Auf vorteilhafte Weise kann dadurch eine komfortable und bedarfsgerechte Bedienung der zumindest einen Ambiente-Beleuchtungseinrichtung ermöglicht werden, wobei über das mitführbare Mobilgerät an jedem Ort im Kraftfahrzeug eine ausreichende Erreichbarkeit gewährleistet ist, insbesondere auch falls sich ein Insasse oder Fahrer nicht im Bereich der Instrumententafel aufhält. Beispielsweise kann dadurch auch im Fall, dass sich der Fahrer in einem Liegebereich in einem hinteren Teil eines Fahrerhauses des Kraftfahrzeugs aufhält, eine einfache Bedienung der zumindest einen Ambiente-Beleuchtungseinrichtung ermöglicht werden, ohne dass der Fahrer zum Verändern einer Beleuchtungseinstellung der zumindest einen Ambiente-Beleuchtungseinrichtung eine bestimmte Bedienstelle im Kraftfahrzeug aufsuchen muss.

Gemäß einem ersten Aspekt kann die zweite Bedieneinrichtung tragbar sein. Beispielsweise kann die zweite Bedieneinrichtung leicht, mobil und/oder handlich sein. Auf vorteilhafte Weise kann dadurch an jedem Ort eine zuverlässige Bedienbarkeit der zumindest einen Ambiente-Beleuchtungseinrichtung gewährleistet werden.

Zudem oder alternativ kann die zweite Bedieneinrichtung in dem Kraftfahrzeug nicht fest verbaut sein. Bevorzugt soll die zweite Bedieneinrichtung nicht in eine Verkleidung oder eine Instrumententafel des Kraftfahrzeugs integriert sein und/oder über eine (z. B. direkte) Kabelverbindung mit dem Kraftfahrzeug verbunden sein. Auch hierdurch kann auf vorteilhafte Weise eine zuverlässige Bedienbarkeit der zumindest einen Ambiente-Beleuchtungseinrichtung von verschiedenen Orten sichergestellt werden.

Zudem oder alternativ kann die zweite Bedieneinrichtung ausgebildet sein, kabellos und/oder drahtlos (z. B. über Funkwellen) mit einer Kommunikationseinrichtung des Kraftfahrzeugs zu kommunizieren. Beispielsweise kann die zweite Bedieneinrichtung dazu eine Transceivereinrichtung zur kabellosen und/oder drahtlosen Kommunikation mit der Kommunikationseinrichtung aufweisen. Entsprechend kann auch die Kommunikationseinrichtung des Kraftfahrzeugs eine Transceivereinrichtung zur kabellosen und/oder drahtlosen Kommunikation mit der zweiten Bedieneinrichtung aufweisen. Die zweite Bedieneinrichtung und das Kraftfahrzeug bzw. die jeweiligen Kommunikationseinrichtungen können bspw. ausgebildet sein, mittels eines (z. B. Mobilfunk-)Kommunikationsstandards miteinander zu kommunizieren. Beispielsweise können die zweite Bedieneinrichtung und das Kraftfahrzeug bzw. die jeweiligen Kommunikationseinrichtungen über Bluetooth, Near Field Communication (NFC), 4G, 5G, Wireless LAN (WLAN) und/oder Radio Frequency Identification (RFID) miteinander zu kommunizieren. Bevorzugt ist die zweite Bedieneinrichtung ausgebildet, vorzugsweise kabellos und/oder drahtlos, eine Nutzereingabe betreffend eine der mehreren Beleuchtungseinstellungen (z. B. einen Beleuchtungseinstellungswunsch) an die Kommunikationseinrichtung zu übertragen. Auf vorteilhafte Weise kann dadurch eine möglichst hohe Bewegbarkeit der zweiten Bedieneinrichtung gewährleistet werden.

Zudem oder alternativ kann die zweite Bedieneinrichtung ausgebildet sein, eine (z. B. von der Kommunikationseinrichtung des Kraftfahrzeugs empfangene) Autorisierungsabfrage (z. B. eine PIN-Abfrage oder Passwortabfrage) zur Authentifizierung an einen Nutzer (z. B. des Mobilgeräts) auszugeben (z. B. auf einer Anzeigeeinrichtung des Mobilgeräts anzuzeigen). Weiterhin kann die zweite Bedieneinrichtung ausgebildet sein, nur bei einer erfolgreichen Authentifizierung (z. B. nach einer Eingabe eines korrekten PINs oder Passwortes durch den Nutzer) eine Bedienung der zumindest einen Ambiente-Beleuchtungseinrichtung mittel der zweiten Bedieneinrichtung zuzulassen (z. B. freizugeben). Bevorzugt handelt es sich bei der Autorisierungsabfrage um eine Zwei-Faktor-Autorisierungsabfrage, bei der bspw. mehrere voneinander unabhängige Merkmale (Faktoren) überprüft werden. Beispielsweise kann im Rahmen Autorisierungsabfrage(n) neben einem PIN auch ein biometrisches Merkmal des Fahrers abgefragt werden. Auf vorteilhafte Weise kann dadurch ein Bedieneingriff von Unberechtigten zuverlässig vermieden werden.

Nach einem weiteren Aspekt kann die zweite Bedieneinrichtung eine (z. B. berührungsempfindliche) Anzeigeeinrichtung (z. B. einen Touchscreen), einen Speicher (z. B. einen Datenspeicher) und eine Verarbeitungseinrichtung (z. B. einen Prozessor) aufweisen. Weiterhin kann die zweite Bedieneinrichtung eingerichtet sein, auf der Verarbeitungseinrichtung ein in dem Speicher hinterlegtes Anwendungsprogramm (z. B. eine App) auszuführen, das die zweite Bedieneinrichtung dazu veranlasst, auf der Anzeigeeinrichtung mehrere (z. B. virtuelle und/oder digitale) Bedienelemente (z. B. aufweisend zumindest eine Bildschirmtaste, zumindest ein Icon und/oder zumindest einen virtuellen Schieber) zur Bedienung der zumindest einen Ambiente-Beleuchtungseinrichtung (z. B. zur Veränderung von Beleuchtungseinstellungen der zumindest einen Ambiente-Beleuchtungseinrichtung) anzuzeigen. Die mehreren Bedienelemente können bspw. mittels Druck-Betätigung und/oder mittels einer Wischgeste betätigbar (z. B. auslösbar) sein. Auf vorteilhafte Weise kann dadurch ein mitunter bereits vorhandenes Mobilgerät des Nutzers (z. B. ein Smartphone oder ein Table-PC) besonders einfach als zweite Bedieneinrichtung eingerichtet werden.

Gemäß einem weiteren Aspekt kann die erste Bedieneinrichtung nicht zerstörungsfrei und/oder nicht werkzeuglos aus dem Kraftfahrzeug entfernbar sein. Beispielsweise kann bei Entfernung der ersten Bedieneinrichtung aus dem Kraftfahrzeug ein Loch und/oder eine getrennte Kabelverbindung vorliegen. Auf vorteilhafte Weise kann dadurch eine vorbestimmte bzw. nicht veränderliche Bedienposition für die zumindest eine Ambiente-Beleuchtungseinrichtung im Kraftfahrzeug bereitgestellt werden.

Zudem oder alternativ kann die erste Bedieneinrichtung mindestens ein mechanisches Bedienelement (z. B. einen Taster) aufweisen. Beispielsweise kann die erste Bedieneinrichtung eine Taster-Bedieneinrichtung (z. B. mit mehreren Tastern) sein.

Zudem oder alternativ kann die erste Bedieneinrichtung an einer Instrumententafel oder an einem Innenverkleidungsteil (z. B. einem Türinnenverkleidungsteil) des Kraftfahrzeugs angeordnet sein. Beispielsweise kann die erste Bedieneinrichtung in die Instrumententafel oder in das Innenverkleidungsteil (z. B. einem Türinnenverkleidungsteil) integriert sein. Bevorzugt ist die erste Bedieneinrichtung dabei im Bereich eines Cockpits des Kraftfahrzeugs angeordnet und/oder von einem auf einem Fahrersitz des Kraftfahrzeugs sitzenden Fahrer erreichbar angeordnet. Auf vorteilhafte Weise kann dadurch wiederum eine vorbestimmte bzw. nicht veränderliche Bedienposition für die zumindest eine Ambiente-Beleuchtungseinrichtung im Kraftfahrzeug bereitgestellt werden.

Nach einem weiteren Aspekt kann die erste Bedieneinrichtung (z. B. ausschließlich) eines, vorzugsweise zwei, besonders bevorzugt drei, der folgenden Bedienelemente (z. B. Taster) zur Bedienung der zumindest einen Ambiente-Beleuchtungseinrichtung (z. B. zur Einstellung von Beleuchtungseinstellungen der zumindest einen Ambiente-Beleuchtungseinrichtung) aufweisen:
Ein An/Aus-Bedienelement (z. B. einen An/Aus-Taster), mittels dessen die zumindest eine Ambiente-Beleuchtungseinrichtung einschaltbar und ausschaltbar sein kann. Beispielsweise kann die zumindest eine Ambiente-Beleuchtungseinrichtung durch Drücken des /Aus-Bedienelement anschaltbar und durch erneutes Drücken ausschaltbar sein.

Ein Farbwahl-Bedienelement (z. B. einen Farbwahl-Taster), mittels dessen eine Leuchtfarbe (z. B. eine Leuchtfarbeneinstellungen) der zumindest einen Ambiente-Beleuchtungseinrichtung einstellbar sein kann. Beispielsweise kann mittels des Farbwahl-Bedienelements eine vorgegebene Anzahl an Leuchtfarbeneinstellungen der zumindest einen Ambiente-Beleuchtungseinrichtung durchschaltbar sein.

Ein Helligkeit-Bedienelement (z. B. einen Helligkeit-Taster), mittels dessen eine Leuchtstärke (z. B. eine Leuchtstärkeeinstellungen) der zumindest einen Ambiente-Beleuchtungseinrichtung einstellbar sein kann. Beispielsweise kann mittels des Helligkeit-Bedienelements eine vorgegebene Anzahl an Leuchtstärkeeinstellungen der zumindest einen Ambiente-Beleuchtungseinrichtung durchschaltbar sein.

Gemäß einem weiteren Aspekt kann das Kraftfahrzeug eingerichtet sein, dass bei Betätigen (z. B. Drücken) des An/Aus-Bedienelements, die zumindest eine Ambiente-Beleuchtungseinrichtung angeschaltet (z. B. aktiviert und/oder in einen leuchtenden Zustand überführt) wird, falls das die zumindest eine Ambiente-Beleuchtungseinrichtung beim Betätigen des An/Aus-Bedienelements ausgeschaltet ist, und ausgeschaltet (z. B. deaktiviert und/oder in einen nicht leuchtenden Zustand überführt) wird, falls das die zumindest eine Ambiente-Beleuchtungseinrichtung beim Betätigen des An/Aus-Bedienelements eingeschaltet ist. Beispielsweise kann das Kraftfahrzeug dazu eine Steuereinrichtung aufweisen, die eingerichtet ist, in Abhängigkeit der Betätigung des An/Aus-Bedienelements entsprechende Steuerbefehle an die zumindest eine Ambiente-Beleuchtungseinrichtung auszugeben.

Zudem oder alternativ kann das Kraftfahrzeug eingerichtet sein, bei Betätigen (z. B. Drücken) des Farbwahl-Bedienelements die Leuchtfarbe der zumindest einen Ambiente-Beleuchtungseinrichtung aus einer vorbestimmten Menge möglicher Leuchtfarben in einer vorgegebenen Reihenfolge (z. B. zyklisch) durchgewechselt werden. Beispielsweise kann das Kraftfahrzeug eingerichtet sein, dass durch wiederholtes Betätigen des Farbwahl-Bedienelements die zumindest einen Ambiente-Beleuchtungseinrichtung wahlweise grün, blau, rot, grün, blau, rot, usw. leuchtet.

Zudem oder alternativ kann das Kraftfahrzeug eingerichtet sein, bei einer ersten Betätigungsweise (z. B. ein kurzes Drücken und/oder eine Short-Press-Betätigung) des Helligkeit-Bedienelements eine Leuchtstärke der zumindest einen Ambiente-Beleuchtungseinrichtung auf einen minimalen Leuchtstärkewert eingestellt wird und bei einer zweiten Betätigungsweise (z. B. ein Gedrückthalten und/oder eine Long-Press-Betätigung) des Helligkeit-Bedienelements eine Leuchtstärke der zumindest einen Ambiente-Beleuchtungseinrichtung (z. B. kontinuierlich) bis zu einem maximalen Leuchtstärkenwert erhöht wird, wobei, wenn die zweite Betätigungsweise (z. B. das Gedrückthalten und/oder die Long-Press-Betätigung) beendet oder unterbrochen wird, ein aktueller (z. B. der zuletzt eingestellte) Leuchtstärke beibehalten wird. All diese Betätigungsvarianten ermöglichen auf vorteilhafte Weise ein möglichst schnelles und einfaches Einstellen besonders wichtiger bzw. relevanter Beleuchtungseinstellungen.

Nach einem weiteren Aspekt kann die zumindest eine Ambiente-Beleuchtungseinrichtung mehrere Beleuchtungseinstellungen aufweisen, bspw. mehrere Leuchtfarbeneinstellungen (z. B. grün, blau, rot, gelb), mehrere Leuchtstärkeeinstellungen (z. B. eine maximale Leuchtstärke, eine minimale Leuchtstärke und mehrere zwischen der maximalen und minimalen Leuchtstärke liegende Zwischenleuchtstärken) und/oder mehrere Effekteinstellungen (z. B. ein Pulsieren, ein langsamer kontinuierlicher Leuchtstärkeanstieg, ein langsamer kontinuierlicher Leuchtstärkeabfall). Bevorzugt weist die zumindest eine Ambiente-Beleuchtungseinrichtung mindestens drei, vorzugsweise mindestens fünf, besonders bevorzugt mindestens zehn verschiedene Beleuchtungseinstellungen auf.

Mittels der ersten Bedieneinrichtung kann bevorzugt zumindest eine der mehreren Beleuchtungseinstellungen auswählbar und/oder einstellbar sein. Zudem oder alternativ kann auch mittels der zweiten Bedieneinrichtung zumindest eine der mehreren Beleuchtungseinstellungen auswählbar und/oder einstellbar sein.

Weiterhin können mittels der (im Kraftfahrzeug fest verbauten) ersten Bedieneinrichtung und der zweiten Bedieneinrichtung (bzw. dem Mobilgerät) jeweils eine (z. B. voneinander) unterschiedliche Anzahl der mehreren Beleuchtungseinstellungen einstellbar sein. Beispielsweise können mittels der zweiten Bedieneinrichtung (bzw. mittels des Mobilgeräts) eine größere Anzahl (und/oder andere Beleuchtungseinstellungen) der mehreren Beleuchtungseinstellungen einstellbar sein als mittels der ersten Bedieneinrichtung. Indem über die erste Bedieneinrichtung, bspw. an der Instrumententafel, nur ein eingeschränkte Bedienbarkeit der zumindest einen Ambiente-Beleuchtungseinrichtung möglich ist, z. B. nur die Bedienung besonders wichtiger Beleuchtungseinstellungen, können Ablenkungen für den Fahrer, z. B. durch langes Suchen nach einer passenden Beleuchtungseinstellung, vermieden werden, während über die zweite Bedieneinrichtung, z. B. während Standzeiten des Kraftfahrzeugs, die volle Funktionalität der zumindest einen Ambiente-Beleuchtungseinrichtung genutzt werden kann, insbesondere ohne dazu eine bestimmte Bedienstelle im Kraftfahrzeug aufsuchen zu müssen.

Gemäß einem weiteren Aspekt können mittels der zweiten Bedieneinrichtung (bzw. mittels des Mobilgeräts) alle der mehreren Beleuchtungseinstellungen einstellbar sein, während mittels der ersten Bedieneinrichtung nur eine (z. B. vorgegeben) Teilmenge (z. B. nur bestimmte Leuchtfarbeneinstellungen und/oder bestimmte Leuchtstärkeeinstellungen) der mehreren Beleuchtungseinstellungen einstellbar sein kann. Bevorzugt kann mittels der zweiten Bedieneinrichtung somit die volle Funktionalität der zumindest einen Ambiente-Beleuchtungseinrichtung genutzt werden, während die erste Bedieneinrichtung nur die Nutzung eines reduzierten Funktionsumfangs der zumindest einen Ambiente-Beleuchtungseinrichtung zulässt.

Zudem oder alternativ kann mittels der ersten Bedieneinrichtung die zumindest eine Ambiente-Beleuchtungseinrichtung (z. B. nur) an- und/oder ausschaltbar sein und/oder (z. B. nur) bestimmte Leuchtfarbeneinstellungen (z. B. bestimmte Leuchtfarben aus einer vorbestimmten Menge möglicher Leuchtfarben) einstellbar sein und/oder (z. B. nur) bestimmte Leuchtstärkeeinstellungen (z. B. bestimmte Leuchtstärken aus einer vorbestimmten Menge möglicher Leuchtfarben) einstellbar sein. Auf vorteilhafte Weise kann dadurch schnelles und einfaches Einstellen besonders wichtiger bzw. relevanter Beleuchtungseinstellungen gewährleistet werden.

Zudem oder alternativ kann das Kraftfahrzeug eine Steuereinrichtung (z. B. ein Steuergerät) aufweisen. Die Steuereinrichtung kann eingerichtet sein, in Abhängigkeit einer mittels der ersten und/oder zweiten Bedieneinrichtung erfassten Nutzereingabe (z. B. in Abhängigkeit eines mittels der ersten und/oder zweiten Bedieneinrichtung erfassten Beleuchtungseinstellungswunsches) die zumindest eine Ambiente-Beleuchtungseinrichtung anzusteuern, eine der mehreren Beleuchtungseinstellungen (z. B. entsprechend der erfassten Nutzereingabe) einzustellen, vorzugsweise sodass mittels der ersten Bedieneinrichtung und der zweiten Bedieneinrichtung jeweils eine unterschiedliche Anzahl der mehreren Beleuchtungseinstellungen einstellbar sind oder eingestellt werden. Beispielsweise kann die Steuereinrichtung eingerichtet sein, in Abhängigkeit von der mittels der ersten und/oder zweiten Bedieneinrichtung erfassten Nutzereingabe entsprechende Steuerbefehle an die zumindest eine Ambiente-Beleuchtungseinrichtung auszugeben.

Nach einem weiteren Aspekt kann während eines Fahrbetriebszustands (z. B. während einer Fahrbewegung) des Kraftfahrzeugs, das Kraftfahrzeug eingerichtet sein, dass mittels der zweiten Bedieneinrichtung keine der mehreren Beleuchtungseinstellungen einstellbar ist und/oder das Einstellen der mehreren Beleuchtungseinstellungen über die zweite Bedieneinrichtung gesperrt ist. Beispielsweise kann auf der zweite Bedieneinrichtung bzw. auf dem Mobilgerät dazu ein Sperrbildschirm angezeigt werden, der den Nutzer darauf hinweist, dass aktuell keine Bedienung über die zweite Bedieneinrichtung bzw. über das Mobilgerät möglich ist. Auf vorteilhafte Weise kann dadurch eine Ablenkung des Fahrers während der Fahrt vermieden werden.

Zudem oder alternativ kann während eines (oder des) Fahrbetriebszustands (z. B. während einer Fahrbewegung) des Kraftfahrzeugs, das Kraftfahrzeug eingerichtet sein, dass mittels der ersten Bedieneinrichtung nur eine vorbestimmte Auswahl an Beleuchtungseinstellungen der Teilmenge der mehreren Beleuchtungseinstellungen und/oder nicht alle Beleuchtungseinstellungen der Teilmenge der mehreren Beleuchtungseinstellungen einstellbar sind oder eingestellt werden. Beispielsweise kann während des Fahrbetriebszustands der ohnehin im Vergleich zur zweiten Bedieneinrichtung eingeschränkte Funktionsumfang verglichen mit einem Parkbzustand des Kraftfahrzeugs nochmals reduziert sein. Auch dadurch kann auf vorteilhafte Weise eine Ablenkung des Fahrers während der Fahrt vermieden werden.

Zudem oder alternativ kann während eines (oder des) Fahrbetriebszustands (z. B. während einer Fahrbewegung) des Kraftfahrzeugs, das Kraftfahrzeug eingerichtet sein, eine maximale Leuchtstärke der zumindest einen Ambiente-Beleuchtungseinrichtung auf einen Wert zu begrenzen, der niedriger ist als während eines Parkzustands des Kraftfahrzeugs (z. B. während keine Fahrbewegung des Kraftfahrzeugs erfolgt). Beispielsweise kann während des Fahrbetriebszustands die zumindest eine Ambiente-Beleuchtungseinrichtung gedimmt sein.

Als Fahrbetriebszustand kann dabei im Allgemeinen bevorzugt ein Zustand des Kraftfahrzeugs verstanden werden, in dem eine Kraftfahrzeugzündung des Kraftfahrzeugs aktiviert, die Parkbremse des Kraftfahrzeugs nicht eingelegt ist und/oder ein Vortrieb des Kraftfahrzeugs erfolgt. Das Vorliegen des Fahrbetriebszustands kann bspw. mittels entsprechender Sensoren, z. B. Zündungssensor und/oder Parkbremsensensor, ermittelt werden. Zudem oder alternativ können dazu auch Bewegungsdaten (z. B. GPS-Daten) des Kraftfahrzeugs und/oder der zweiten Bedieneinrichtung genutzt werden.

Als Parkzustand kann im Allgemeinen bevorzugt ein Zustand des Kraftfahrzeugs verstanden werden, in dem die Kraftfahrzeugzündung des Kraftfahrzeugs deaktiviert, die Parkbremse des Kraftfahrzeugs eingelegt ist und/oder kein Vortrieb des Kraftfahrzeugs erfolgt.

Gemäß einem weiteren Aspekt kann die zweite Bedieneinrichtung (bzw. das Mobilgerät) ausgebildet sein, kabellos und/oder drahtlos (z. B. mittels eines Kommunikationsstandards, insbesondere Bluetooth-, NFC-, 4G-, 5G-, WLAN- und/oder RFID-Standards) mit einer weiteren Kommunikationseinrichtung (z. B. einer Transceivereinrichtung) eines (z. B. vom vorgenannten Kraftfahrzeugs verschiedenen) weiteren Kraftfahrzeugs zu kommunizieren. Beispielsweise kann die zweite Bedieneinrichtung (bzw. das Mobilgerät) ausgebildet sein, sowohl an die Kommunikationseinrichtung des Kraftfahrzeugs als auch an die weitere Kommunikationseinrichtung des weiteren Kraftfahrzeugs je eine Nutzereingabe betreffend eine Beleuchtungseinstellung (z. B. einen Beleuchtungseinstellungswunsch) zu übertragen, beispielsweise zu verschiedenen Zeitpunkten. Auf vorteilhafte Weise können dadurch mittels einer einzigen (zweiten) Bedieneinrichtung Ambiente-Beleuchtungseinrichtungen verschiedener Kraftfahrzeuge bedient werden.

Zudem oder alternativ kann mittels der zweiten Bedieneinrichtung (bzw. mittels des Mobilgeräts) zumindest eine weitere Ambiente-Beleuchtungseinrichtung eines (oder des) weiteren Kraftfahrzeugs bedienbar sein. Beispielsweise kann mittels der Bedienumgebung der zweiten Bedieneinrichtung (bzw. des Mobilgeräts) eine Auswahlmöglichkeit bereitgestellt werden, über die der Nutz entscheiden kann, ob die Ambiente-Beleuchtungseinrichtung des Kraftfahrzeugs oder die weitere Ambiente-Beleuchtungseinrichtung des weiteren Kraftfahrzeugs eingestellt werden soll. Auf vorteilhafte Weise kann auch dadurch eine einzige (mitunter dem Nutzer vertraute) Bedieneinrichtung zur Bedienung unterschiedlicher Ambiente-Beleuchtungseinrichtungen verschiedener Kraftfahrzeuge genutzt werden.

Nach einem weiteren Aspekt kann die zumindest eine Ambiente-Beleuchtungseinrichtung wenigstens eine der folgenden Ambiente-Beleuchtungseinrichtungen aufweisen:
Eine Dachhimmel-Beleuchtungseinrichtung, die vorzugsweise in einem Bereich (z. B. unterhalb) eines Dachhimmels des Kraftfahrzeugs angeordnet ist und/oder ausgebildet ist, den Dachhimmel (z. B. flächig) zu beleuchten. Beispielsweise kann die Dachhimmel-Beleuchtungseinrichtung eine Hauptabstrahlrichtung aufweisen, die parallel zum Dachhimmel orientiert ist.

Eine Fußraum-Beleuchtungseinrichtung, die vorzugsweise in einem Bereich (z. B. oberhalb) eines Fußraums des Kraftfahrzeugs angeordnet ist und/oder ausgebildet ist, den Fußraum (z. B. einen Boden des Fußraums) zu beleuchten (z. B. von oben). Beispielsweise kann die Fußraum-Beleuchtungseinrichtung eine Hauptabstrahlrichtung aufweisen, die senkrecht zum Boden des Fußraums orientiert ist.

Eine Seitentür-Beleuchtungseinrichtung, die vorzugsweise an einer (z. B. Seiten-)Fahrzeugtür des Kraftfahrzeugs (z. B. unterhalb einer Armlehne) angeordnet ist und/oder ausgebildet ist, die Fahrzeugtür zu beleuchten. Beispielsweise kann die Seitentür-Beleuchtungseinrichtung in eine Türinnenverkleidung der Fahrzeugtür integriert sein und/oder eine Hauptabstrahlrichtung aufweisen, die (z. B. vertikal nach unten) entlang der Fahrzeugtür orientiert ist.

Eine Zigarettenanzünder-Beleuchtungseinrichtung, die vorzugsweise in einem Bereich (z. B. oberhalb) eines Zigarettenanzünders des Kraftfahrzeugs (z. B. in einem den Zigarettenanzünder aufweisenden Zigarettenanzünderfach der Instrumententafel) angeordnet ist und/oder ausgebildet ist, den Zigarettenanzünder zu beleuchten. Beispielsweise kann die Zigarettenanzünder-Beleuchtungseinrichtung in die Instrumententafel (z. B. in das Zigarettenanzünderfach) integriert sein und/oder eine Hauptabstrahlsrichtung aufweisen, die (z. B. vertikal) nach unten und/oder senkrecht zu einer Entnahmerichtung des Zigarettenanzünders orientiert ist.

Eine Getränkehalter-Beleuchtungseinrichtung, die vorzugsweise in einem Bereich eines Getränkehalters des Kraftfahrzeugs (z. B. in einem den Getränkehalter aufweisenden Getränkehalterfach der Instrumententafel) angeordnet ist und/oder ausgebildet ist, den Getränkehalter zu beleuchten. Beispielsweise kann die Getränkehalter-Beleuchtungseinrichtung in die Instrumententafel (z. B. in das Getränkehalterfach) integriert sein und/oder eine Hauptabstrahlrichtung aufweisen, die horizontal und/oder senkrecht zu einer Entnahmerichtung des Getränkehalters orientiert ist.

Eine Dashboard-Beleuchtungseinrichtung, die vorzugsweise an einer Instrumententafel (z. B. Dashboadleiste der Instrumententafel) des Kraftfahrzeugs (z. B. oberhalb eines Handschuhfachs der Instrumententafel) angeordnet ist und/oder ausgebildet ist, eine Kontur der Instrumententafel (z. B. eine Kontur der Dashboadleiste) hervorzuheben. Beispielsweise kann die Dashboard-Beleuchtungseinrichtung in die Instrumententafel integriert sein und/oder sich von einem türseitigen Endbereich der Instrumententafel bis in einen mittelkonsolenseitigen Zentralbereich der Instrumententafel erstreckt.

Gemäß einem weiteren Aspekt kann die zumindest eine Ambiente-Beleuchtungseinrichtung mindestens eine (z. B. streifenförmige und/oder linienförmige) Lichtleiste (z. B. eine Leuchtdioden-Lichtleiste) aufweisen. Die mindestens eine Lichtleiste kann vorzugsweise eine schmale und/oder längliche Form aufweisen und/oder mehreren entlang einer Linie (oder Reihe) angeordnete (z. B. voneinander beabstandete und/oder auf einer gemeinsamen Platine montierte) Leuchtquellen (z. B. Leuchtdioden) aufweisen. Auf vorteilhafte Weise kann dadurch eine platzsparende und dennoch intensive Beleuchtung bereitgestellt werden.

Zudem oder alternativ kann die zumindest eine Ambiente-Beleuchtungseinrichtung ausgebildet sein, in verschiedenen Leuchtfarben zu leuchten (z. B. in mindestens drei verschiedenen Leuchtfarben oder in mindestens fünf verschiedenen Leuchtfarben) und/oder ihre Leuchtfarbe zu wechseln. Beispielsweise kann die zumindest eine Ambiente-Beleuchtungseinrichtung eine RGB-Beleuchtungseinrichtung aufweisen, die eine rote, grüne und blaue Leuchtquelle aufweist und durch additive Farbmischung des Lichts dieser Leuchtquellen weitere Leuchtfarben (z. B. gelb, violett und/oder weiß) emittieren kann. Auf vorteilhafte Weise können dadurch eine hohe Flexibilität bei der Erzeugung von Lichtstimmungen gewährleistet werden.

Zudem oder alternativ kann die zumindest eine Ambiente-Beleuchtungseinrichtung mehrere verschiedenfarbige Leuchtdioden aufweisen. Beispielsweise kann die zumindest eine Ambiente-Beleuchtungseinrichtung mindestens eine, rotes Licht emittierende Leuchtdiode, eine, grünes Licht emittierende Leuchtdiode und eine, blaues Licht emittierende Leuchtdiode aufweisen. Auf vorteilhafte Weise können dadurch wiederum eine hohe Flexibilität bei der Erzeugung von Lichtstimmungen gewährleistet werden.

Zudem oder alternativ kann die zumindest eine Ambiente-Beleuchtungseinrichtung mindestens einen (z. B. einstückigen) Diffusor und/oder mindestens ein als Diffusor wirkendes (z. B. einstückiges) Lichtaustrittselement (z. B. Streuscheibe und/oder Vorsatzoptik) aufweisen. Beispielweise kann der mindestens eine Diffusor und/oder das mindestens eine Lichtaustrittselement aus einem stark streuenden Material, z. B. einem transluzenten Material, hergestellt sein. Bevorzugt ist der mindestens eine Diffusor und/oder das mindestens eine Lichtaustrittselement ausgebildet, dass Licht bei dessen Transmission durch den mindestens einen Diffusor und/oder das mindestens eine Lichtaustrittselement gleichmäßig in alle Raumrichtungen zur streuen, z. B. dass für einen Betrachter eine möglichst homogene Lichtverteilung erzeugt wird und/oder einzelne Leuchtquellen (z. B. Leuchtdioden) der zumindest einen Ambiente-Beleuchtungseinrichtung für einen Betrachter nicht sichtbar oder auflösbar sind.

Nach einem weiteren Aspekt kann die zumindest eine Ambiente-Beleuchtungseinrichtung mehrere (z. B. verschiedene und/oder im Kraftfahrzeug verteilt angeordnete) Ambiente-Beleuchtungseinrichtungen aufweisen. Beispielsweise kann die zumindest eine Ambiente-Beleuchtungseinrichtung mindestens zwei, vorzugsweise mindestens vier, besonders bevorzugt mindestens sechs, (z. B. verschiedene) Ambiente-Beleuchtungseinrichtungen aufweisen.

Gemäß einer Ausführungsform können mittels der ersten Bedieneinrichtung die mehreren Ambiente-Beleuchtungseinrichtungen (z. B. nur) miteinander gekoppelt bedienbar sein. Beispielsweise kann die erste Bedieneinrichtung ausgebildet sein, die mehreren Ambiente-Beleuchtungseinrichtungen gleich und/oder gemäß einer gemeinsamen Beleuchtungseinstellung einzustellen, sodass bspw. alle der mehreren Ambiente-Beleuchtungseinrichtungen in derselben Leuchtfarbe und/oder in derselben Leuchtstärke leuchten.

Zudem oder alternativ können mittels der zweiten Bedieneinrichtung die mehreren Ambiente-Beleuchtungseinrichtungen unabhängig voneinander (z. B. einzeln) bedienbar sein. Beispielsweise kann die zweite Bedieneinrichtung ausgebildet sein, eine erste Ambiente-Beleuchtungseinrichtung (z. B. eine Dachhimmel-Beleuchtungseinrichtung) der mehreren Ambiente-Beleuchtungseinrichtungen unabhängig von einer zweiten Ambiente-Beleuchtungseinrichtung (z. B. eine Fußraum-Beleuchtungseinrichtung) der mehreren Ambiente-Beleuchtungseinrichtungen einzustellen, sodass bspw. die erste und zweite Ambiente-Beleuchtungseinrichtung in unterschiedlichen Leuchtfarben und/oder unterschiedlichen Leuchtstärken leuchten.

Nach einem weiteren Aspekt können mittels der mehreren Ambiente-Beleuchtungseinrichtungen verschiedene (z. B. vordefinierte) Lichtstimmungen (z. B. eine Sonnenaufgangs-Lichtstimmung und/oder eine Waldambiente-Lichtstimmung) erzeugbar (z. B. generierbar) sein. Bevorzugt erfolgt dies dadurch, dass die mehrere Ambiente-Beleuchtungseinrichtungen zumindest teilweise voneinander unterschiedliche Leuchtfarben-, Leuchtstärke- und/oder Effekteinstellungen aufweisen und/oder in zumindest teilweise voneinander unterschiedlichen Leuchtfarben-, Leuchtstärke- und/oder Effekteinstellungen eingestellt sind oder werden. Beispielsweise können die mehreren Ambiente-Beleuchtungseinrichtungen ausgebildet sein, Farb- und/oder Helligkeitsverläufe entlang (z. B. entlang bestimmter Richtungen, insbesondere entlang einer Fahrzeughochachse) im Innenraum des Kraftfahrzeugs zu erzeugen.

Zudem oder alternativ können mittels der ersten Bedieneinrichtung und/oder mittels der zweiten Bedieneinrichtung verschiedene (z. B. vordefinierte) Lichtstimmungen (z. B. eine Sonnenaufgangs-Lichtstimmung und/oder eine Waldambiente-Lichtstimmung) der mehreren Ambiente-Beleuchtungseinrichtungen einstellbar sein. Beispielsweise können dazu an der Benutzerumgebung der zweiten Bedieneinrichtung (z. B. digitale) Bedienelemente bereitgestellt sein, welchen jeweils verschiedene Lichtstimmungen zugeordnet sind, wobei bei einer Betätigung eines der Bedienelemente die entsprechende Lichtstimmung eingestellt wird. Grundsätzlich können mittels der zweiten Bedieneinrichtung bspw. auch neue Lichtstimmungen durch den Nutzer einstellbar und/oder speicherbar sein.

Gemäß einem weiteren Aspekt kann das Kraftfahrzeug ein Nutzfahrzeug sein. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein.

Zudem oder alternativ kann das Kraftfahrzeug ein Fahrerhaus aufweisen. Als Fahrerhaus kann dabei bspw. der Teil eines Aufbaus von Nutzfahrzeugen verstanden werden, der den Raum für Fahrzeugführer und ggf. Begleitpersonen bildet. In dem Fahrerhaus kann ein Lenkrad, eine Instrumententafel und/oder eine Liege angeordnet sein.

Zudem oder alternativ kann die zumindest eine Ambiente-Beleuchtungseinrichtung (jeweils) eine Fahrerhaus-Ambiente-Beleuchtungseinrichtung sein, vorzugsweise zur indirekten Beleuchtung eines Fahrerhauses des Kraftfahrzeugs und/oder zur Hervorhebung einer Kontur wenigstens einer Interiorkomponente des Fahrerhauses.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eine Kraftfahrzeugs gemäß einer Ausführungsform;
- Figur 2:: eine schematische Darstellung einer ersten Bedieneinrichtung gemäß einer Ausführungsform;
- Figur 3:: eine schematische Darstellung einer zweiten Bedieneinrichtung gemäß einer Ausführungsform;
- Figur 4:: eine schematische Darstellung eines Bereichs einer Instrumententafel eines Kraftfahrzeugs gemäß einer Ausführungsform;
- Figur 5:: eine schematische Darstellung eines Bereichs einer beifahrerseitigen Fahrzeugtür eines Kraftfahrzeugs gemäß einer Ausführungsform; und
- Figuren 6A-6K:: schematische Darstellungen einer Ausführung eines Anwendungsprogramms auf einem Mobilgerät gemäß einer Ausführungsform.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

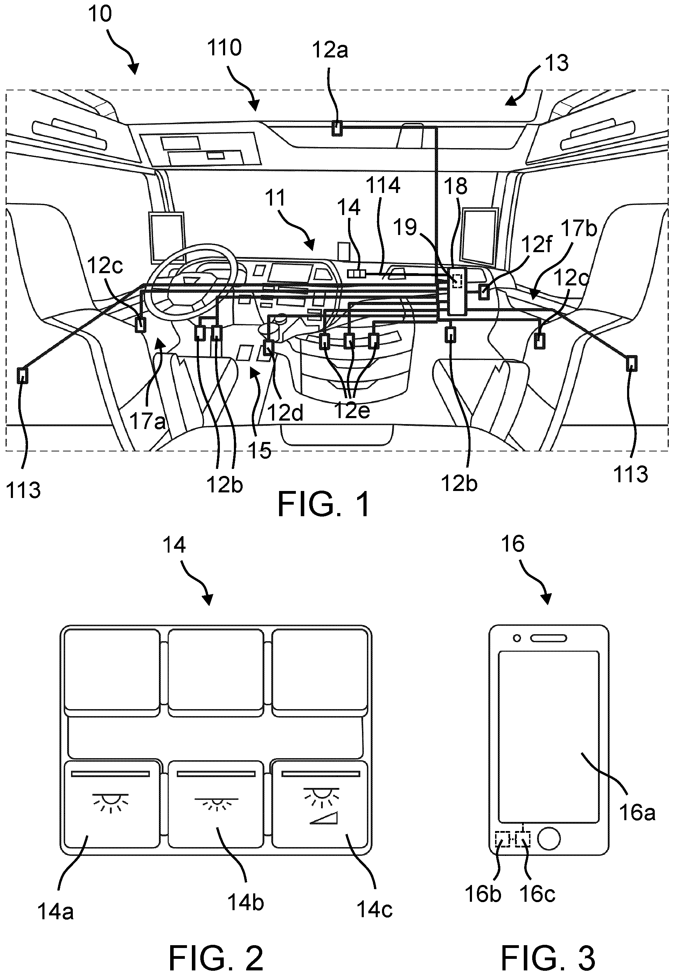

Figur 1, 4 und 5 zeigen jeweils ausschnittsweise ein Kraftfahrzeug 10. Vorliegend handelt es sich bei dem Kraftfahrzeug 10 beispielhaft um ein Nutzfahrzeug, wobei eine Innenansicht eines Fahrerhauses des Nutzfahrzeugs dargestellt ist. Grundsätzlich kann das Kraftfahrzeug 10 allerdings auch ein PKW und/oder ein Kraftfahrzeug 10 ohne Fahrerhaus sein.

Das Kraftfahrzeug 10 weist bevorzugt einen Innenraum 110 auf, der von einem Außenraum des Kraftfahrzeugs 10 durch eine Karosserie des Kraftfahrzeugs 10 getrennt ist. In dem Innenraum 110 können mehrere Interiorkomponenten, darunter bspw. eine Instrumententafel 11 und/oder ein Dachhimmel 13 angeordnet sein. Wie in Figur 1 dargestellt, kann sich die Instrumententafel 11 entlang einer Fahrzeugquerachse von einer fahrerseitigen Fahrzeugtür 17a (Fahrertür) bis zu einer beifahrerseitigen Fahrzeugtür 17b (Beifahrertür) erstrecken. Die Instrumententafel 11 kann z. B. Steuerkomponenten zum Betreiben des Kraftfahrzeugs 10 (z. B. ein Kombiinstrument, eine Lenksäule, Fahrzeuganzeigen, Displays, Lüftungs-Öffnungen, eine Mittelkonsole, ein Dashboard etc.) umfassen oder aufnehmen. Weiterhin kann in der Instrumententafel 11 ein Zigarettenanzünder und/oder ein Getränkehalter aufgenommen sein. Ferner kann die Instrumententafel 11 in ihrem beifahrerseitigen Bereich ein Dashboard, bspw. oberhalb eines Handschuhfachs der Instrumententafel 11, aufweisen.

Weiterhin können in dem Innenraum 110 des Kraftfahrzugs 10 bevorzugt Betätigungseinrichtungen zur Fahrzeugführung, wie bspw. Pedale, Blinkerhebel, Scheibenwischerhebel und/oder ein Handbremshebel und/oder Handbremsschalter zur Betätigung einer Handbremse des Kraftfahrzeugs 10, angeordnet sein.

Ferner weist das Kraftfahrzeug 10 zumindest eine Ambiente-Beleuchtungseinrichtung 12a, 12b, 12c, 12d, 12e, 12f auf. Die zumindest eine Ambiente-Beleuchtungseinrichtung 12a, 12b, 12c, 12d, 12e, 12f ist bevorzugt im Innenraum 110 des Kraftfahrzeug 10 angeordnet, bspw. an einer Interiorkomponente und/oder an einem Innenverkleidungsteil des Kraftfahrzeugs 10. Bevorzugt dient die zumindest eine Ambiente-Beleuchtungseinrichtung 12a, 12b, 12c, 12d, 12e, 12f zur ambienten Beleuchtung des Innenraums 110, insbesondere zur Komfortsteigerung für die Insassen des Kraftfahrzeugs 10 und/oder zur ästhetischen Aufwertung des Innenraums 110. Beispielsweise kann mittels der zumindest einen Ambiente-Beleuchtungseinrichtung 12a, 12b, 12c, 12d, 12e, 12f eine indirekte Beleuchtung des Innenraums 110 und/oder eine bestimmte Lichtstimmung im Innenraum 110 des Kraftfahrzugs 10 erzeugbar sein. Mittels der zumindest einen Ambiente-Beleuchtungseinrichtung 12a, 12b, 12c, 12d, 12e, 12f können jedoch auch Konturen von Interiorkomponenten hervorgehoben sein.

Lediglich beispielhaft kann die zumindest eine Ambiente-Beleuchtungseinrichtung 12a, 12b, 12c, 12d, 12e, 12f mindestens eine Dachhimmel-Beleuchtungseinrichtung 12a, mindestens eine Fußraum-Beleuchtungseinrichtung 12b, mindestens eine Seitentür-Beleuchtungseinrichtung 12c, mindestens eine Zigarettenanzünder-Beleuchtungseinrichtung 12d, mindestens eine Getränkehalter-Beleuchtungseinrichtung 12e und/oder mindestens eine Dashboard-Beleuchtungseinrichtung 12f (z. B. in Form einer am Dashboard bzw. der Instrumententafel 11 angeordneten Zierleiste) aufweisen.

Die mindestens eine Dachhimmel-Beleuchtungseinrichtung 12a kann bspw. angeordnet und/oder ausgebildet sein, den Dachhimmel 13 (z. B. flächig) zu beleuchten (vgl. Figur 1). Beispielweise kann die mindestens eine Dachhimmel-Beleuchtungseinrichtung 12a dazu im Bereich des Dachhimmels 13, bspw. auf Höhe des Dachhimmels 13 oder unterhalb eines gekrümmten Randbereichs des Dachhimmels 13, angeordnet sein und/oder eine Hauptabstrahlsrichtung aufweisen, die horizontal orientiert ist.

Die mindestens eine Fußraum-Beleuchtungseinrichtung 12b kann bspw. angeordnet und/oder ausgebildet sein, den Fußraum 15 (z. B. einen Boden des Fußraums 15) zu beleuchten (vgl. Figur 1). Beispielweise kann die mindestens eine Fußraum-Beleuchtungseinrichtung 12b dazu im Bereich des Fußraums 15, bspw. auf Höhe des Fußraums 15 oder an einer Unterseite der Instrumententafel 11, angeordnet sein und/oder eine Hauptabstrahlrichtung aufweisen, die senkrecht zum Boden des Fußraums 15 orientiert ist.

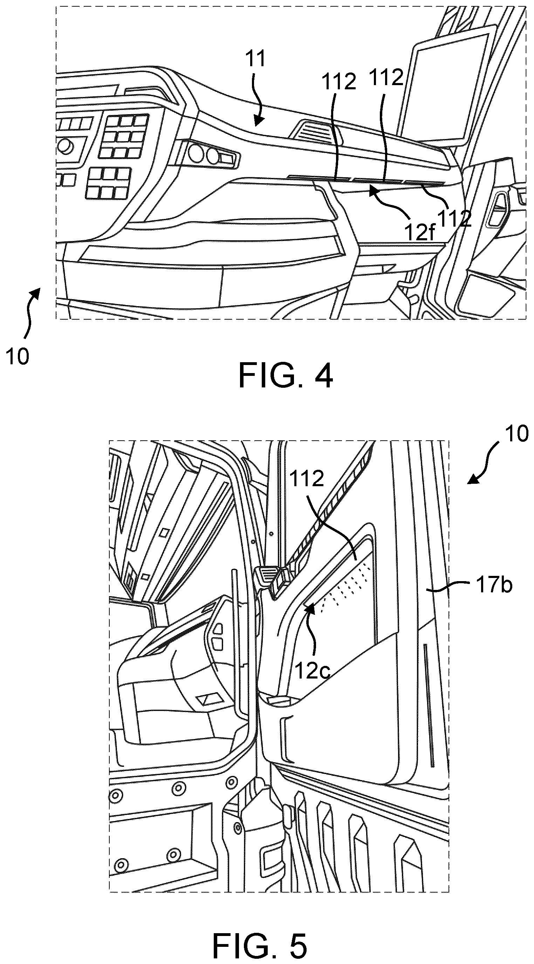

Die mindestens eine Seitentür-Beleuchtungseinrichtung 12c kann bspw. angeordnet und/oder ausgebildet sein, eine fahrerseitige oder beifahrerseitige Fahrzeugtür 17a, 17b des Kraftfahrzeugs 10 (z. B. eine Innenverkleidung der fahrerseitigen oder beifahrerseitigen Fahrzeugtür 17a, 17b) zu beleuchten (vgl. Figur 5). Beispielsweise kann die mindestens eine Seitentür-Beleuchtungseinrichtung 12c dazu im Bereich der fahrerseitigen und/oder beifahrerseitigen Fahrzeugtür 17a, 17b, bspw. auf Höhe der fahrerseitigen und/oder beifahrerseitigen Fahrzeugtür 17a, 17b und/oder unterhalb einer Armlehne der fahrerseitigen und/oder beifahrerseitigen Fahrzeugtür 17a, 17b, angeordnet sein und/oder eine Hauptabstrahlrichtung aufweisen, die vertikal nach unten orientiert ist.

Die mindestens eine Zigarettenanzünder-Beleuchtungseinrichtung 12d kann bspw. angeordnet und/oder ausgebildet sein, einen Zigarettenanzünder des Kraftfahrzeugs 10 zu beleuchten (vgl. Figur 1).. Beispielweise kann die mindestens eine Zigarettenanzünder-Beleuchtungseinrichtung 12d dazu im Bereich des Zigarettenanzünders, bspw. in einem den Zigarettenanzünder aufweisenden Zigarettenanzünderfach der Instrumententafel 11, angeordnet sein und/oder eine Hauptabstrahlrichtung aufweisen, die vertikal nach unten orientiert ist.

Die mindestens eine Getränkehalter-Beleuchtungseinrichtung 12e kann bspw. angeordnet und/oder ausgebildet sein, einen Getränkehalter des Kraftfahrzeugs 10 zu beleuchten (vgl. Figur 1). Beispielweise kann die mindestens eine Getränkehalter-Beleuchtungseinrichtung 12e dazu im Bereich des Getränkehalters, bspw. in einem den Getränkehalter aufweisenden Getränkehalterfach der Instrumententafel 11, angeordnet sein und/oder eine Hauptabstrahlsrichtung aufweisen, die horizontal und/oder senkrecht zu einer Entnahmerichtung des Getränkehalters orientiert ist.

Die mindestens eine Dashboard-Beleuchtungseinrichtung 12f kann bspw. angeordnet und/oder ausgebildet sein, eine Kontur der Instrumententafel 11 hervorzuheben (vgl. Figur 4). Beispielweise kann die mindestens eine Dashboard-Beleuchtungseinrichtung 12f dazu an der Instrumententafel 11, bspw. oberhalb eines Handschuhfachs der Instrumententafel 11, angeordnet sein und/oder eine Gesamtlänge aufweisen, die mindestens 30% eines beifahrerseitigen Abschnitts der Instrumententafel 11 entspricht.

Unabhängig von der konkreten Ausführung und/oder Positionierung ist die zumindest eine Ambiente-Beleuchtungseinrichtung 12a, 12b, 12c, 12d, 12e, 12f bevorzugt ausgebildet, (z. B. zum Erzeugen verschiedener Lichtstimmungen) in verschiedenen Leuchtfarben zu leuchten. Beispielsweise kann die zumindest eine Ambiente-Beleuchtungseinrichtung 12a, 12b, 12c, 12d, 12e, 12f mehrere Leuchtfarbeneinstellungen (z.B. grün, blau, rot, gelb, weiß) aufweisen.

Lediglich beispielhaft kann die zumindest eine Ambiente-Beleuchtungseinrichtung 12a, 12b, 12c, 12d, 12e, 12f dazu mehrere verschiedenfarbige Leuchtquellen, bspw. Leuchtdioden, aufweisen. Bevorzugt weist die zumindest eine Ambiente-Beleuchtungseinrichtung 12a, 12b, 12c, 12d, 12e, 12f mindestens eine rot leuchtende bzw. rotes Licht emittierende Leuchtquelle, eine grün leuchtende bzw. grünes Licht emittierende Leuchtquelle und eine blau leuchtende bzw. blaues Licht emittierende Leuchtquelle auf. Durch wahlweises Aktivieren der verschiedenen Leuchtquellen, Variieren der jeweiligen Leuchtstärke der verschiedenen Leuchtquellen und additives Mischen des Lichts dieser Leuchtquellen können weitere bzw. beliebe Farben des sichtbaren Spektrums erzeugbar sein. Bevorzugt sind die verschiedenfarbigen Leuchtquellen dabei unabhängig voneinander oder einzeln ansteuerbar.

Insbesondere im Fall, dass die zumindest eine Ambiente-Beleuchtungseinrichtung 12a, 12b, 12c, 12d, 12e, 12f mehrere im Kraftfahrzeug 10 verteilt angeordnete Ambiente-Beleuchtungseinrichtungen 12a, 12b, 12c, 12d, 12e, 12f aufweist (vgl. Figur 1), können mittels der zumindest einen Ambiente-Beleuchtungseinrichtung 12a, 12b, 12c, 12d, 12e, 12f verschiedene Lichtstimmungen erzeugbar sein. Beispielsweise kann eine Sonnenaufgangs-Lichtstimmung vorgesehen sein, die einen vom Boden des Fußraums 15 zum Dachhimmel 13 hin dunkler werdenden Leuchtstärkeverlauf und/oder einen Leuchtfarbverlauf von weiß am Boden des Fußraums 15 über orange/rot im Bereich der Instrumententafel 11 bis schwarz im Bereich des Dachhimmels 13 aufweist. Die Sonnenaufgangs-Lichtstimmung kann sich über die Zeit ändern, insbesondere heller werden, bspw. um die Lichtverhältnisse während eines realen Sonnenaufgangs zu imitieren. Beispielsweise kann die Sonnenaufgangs-Lichtstimmung als Teil einer Weckfunktion für den Fahrer einstellbar sein. Zudem oder alternativ kann eine Waldambiente-Lichtstimmung vorgesehen sein, die einen vom Boden des Fußraums 15 zum Dachhimmel 13 hin heller werdenden Leuchtstärkeverlauf und/oder einen Leuchtfarbverlauf von schwarz am Boden des Fußraums 15 über grün im Bereich der Instrumententafel 11 bis weiß im Bereich des Dachhimmels 13 aufweist. Die Waldambiente-Lichtstimmung kann die Lichtverhältnisse in einem realen Wald imitieren. Zudem oder alternativ kann eine Fokus-Lichtstimmung zum Vermeiden oder Mindern von Müdigkeit bei Nachtfahrten und/oder eine Entspannungs-Lichtstimmung für Ruhezeiten vorgesehen sein.

Insgesamt kann die zumindest eine Ambiente-Beleuchtungseinrichtung 12a, 12b, 12c, 12d, 12e, 12f somit mehrere (unterschiedliche) Beleuchtungseinstellungen aufweisen. Die Beleuchtungseinstellungen können Leuchtfarbeneinstellungen (z. B. grün, blau, rot, gelb), Leuchtstärkeeinstellungen (z. B. eine maximale Leuchtstärke, eine minimale Leuchtstärke und mehrere zwischen der maximalen und minimalen Leuchtstärke liegende Zwischenleuchtstärken) und/oder Effekteinstellungen (z. B. ein Pulsieren, ein langsamer kontinuierlicher Leuchtstärkeanstieg, ein langsamer kontinuierlicher Leuchtstärkeabfall) aufweisen oder sein. Im Fall mehrerer Ambiente-Beleuchtungseinrichtungen 12a, 12b, 12c, 12d, 12e, 12f können die mehreren Beleuchtungseinstellungen 12a, 12b, 12c, 12d, 12e, 12f individuelle Beleuchtungseinstellungen für jede der mehreren Ambiente-Beleuchtungseinrichtungen 12a, 12b, 12c, 12d, 12e, 12f umfassen.

In einer Ausführungsform kann die zumindest eine Ambiente-Beleuchtungseinrichtung 12a, 12b, 12c, 12d, 12e, 12f mindestens eine Lichtleiste 112 aufweisen. Beispielsweise kann die mindestens eine Lichtleiste 112 eine quasi eindimensionale, streifenförmige und/oder linienförmige Form aufweisen. Die mindestens eine Lichtleiste 112 kann bspw. ein Aspektverhältnis von mindestens drei, vorzugsweise mindestens fünf, besonders bevorzugt mindestens zehn aufweisen. Die mindestens eine Lichtleiste 112 kann mehrere Leuchtquellen (z. B. Leuchtdioden) aufweisen, die bevorzugt entlang einer Linie oder in einem schmalen Array, z. B. in einem 2x20-Array, angeordnet sind. Besonders bevorzugt handelt es sich bei der mindestens eine Lichtleiste 112 um eine Leuchtdioden-Lichtleiste. Die mehreren Leuchtquellen können dabei auf einem gemeinsamen Träger getragen sein und/oder auf einer gemeinsamen Platine angeordnet sein und/oder eine gemeinsame Stromversorgung aufweisen. Die mehreren Leuchtquellen können regelmäßig und/oder kettenartig angeordnet sein.

Für ein möglichst homogen leuchtendes optisches Erscheinungsbild der zumindest einen Ambiente-Beleuchtungseinrichtung 12a, 12b, 12c, 12d, 12e, 12f und/oder der Lichtleiste 112 kann die zumindest eine Ambiente-Beleuchtungseinrichtung 12a, 12b, 12c, 12d, 12e, 12f und/oder die Lichtleiste 112 optional ein als Diffusor wirkendes Lichtaustrittselement aufweisen. Das, z. B. als Lichtaustrittsscheibe ausgebildete, Lichtaustrittselement kann bspw. plattenförmig sein und/oder die mehrere Leuchtquellen (z. B. zum Innenraum 110 des Kraftfahrzeugs 10 hin) überdecken und/oder verblenden. Das Lichtaustrittselement kann aus einem diffus streuendem Material, bspw. Acrylglas, Ploycarbonat und/oder Polyethylenterephthalat gefertigt sein. Das Lichtaustrittselement kann ausgebildet sein, durch das Lichtaustrittselement tretendendes Licht diffus und/oder homogen in alle Raumrichtungen zu verteilen bzw. zu streuen. Bevorzugt sind dadurch die einzelnen Leuchtquellen der zumindest einen Ambiente-Beleuchtungseinrichtung 12a, 12b, 12c, 12d, 12e, 12f und/oder der Lichtleiste 112 für einen Betrachter nicht einzeln auflösbar und es entsteht der Eindruck eines homogenen Leuchtstreifens.

Zur Bedienung der zumindest einen Ambiente-Beleuchtungseinrichtung 12a, 12b, 12c, 12d, 12e, 12f, bspw. zum Einstellen der Beleuchtungseinstellungen, weist das Kraftfahrzeug 10 eine erste Bedieneinrichtung 14 (vgl. Figuren 1 und 2) und eine zweite Bedieneinrichtung 16 (vgl. Figur 3) auf. Entsprechend kann die zumindest einen Ambiente-Beleuchtungseinrichtung 12a, 12b, 12c, 12d, 12e, 12f wahlweise über die erste Bedieneinrichtung 14 oder die zweite Bedieneinrichtung 16 bedienbar sein. Im Falle einer gleichzeitigen Betätigung der ersten und zweiten Bedieneinrichtung 14, 16 kann ggf. eine Priorisierung einer der Bedieneinrichtung vorgesehen sein.

Die erste Bedieneinrichtung 14 ist dabei in dem Kraftfahrzeug 10 fest verbaut. Beispielsweise kann die erste Bedieneinrichtung 14 an der Instrumententafel 11 oder an einem Innenverkleidungsteil (z. B. einem Türinnenverkleidungsteil) des Kraftfahrzeug 10 angeordnet sein und/oder in die Instrumententafel 11 oder in das Innenverkleidungsteil integriert sein (vgl. Figur 1). Die erste Bedieneinrichtung 14 kann bspw. mit einer Fahrzeugkomponente des Kraftfahrzeugs 10 verschraubt, verklebt und/oder verrastet sein und/oder mittels einer (physischen) Kabelverbindung 114 mit einer, bspw. hinter oder innerhalb der Instrumententafel angeordneten, Steuereinrichtung 18 des Kraftfahrzeugs 10 verbunden sein (vgl. Figur 1). Entsprechend kann die erste Bedieneinrichtung 14 vorzugsweise nicht zerstörungsfrei aus dem Kraftfahrzeug 10 entfernbar sein.

Die Steuereinrichtung 18 kann weiterhin, wie in Figur 1 dargestellt, über eine oder mehrere Signalleitungen mit der zumindest einen Ambiente-Beleuchtungseinrichtung 12a, 12b, 12c, 12d, 12e, 12f verbunden sein. Zudem oder alternativ kann die Steuereinrichtung 18 mit mindestens einem an der fahrerseitigen und/oder beifahrerseitigen Fahrzeugtür 17a, 17b angeordneten der Warn-Leuchtelement 113 verbunden sein, welches zur Warnung anderer Verkehrsteilnehmer vor der offenstehenden oder sich öffnenden fahrerseitigen und/oder beifahrerseitigen Fahrzeugtür 17a, 17b.

In der in Figur 2 gezeigten Ausführungsform weist die erste Bedieneinrichtung 14 zur Bedienung der zumindest einen Ambiente-Beleuchtungseinrichtung 12a, 12b, 12c, 12d, 12e, 12f ein An/Aus-Bedienelement 14a, ein Farbwahl-Bedienelement 14b und ein Helligkeit-Bedienelement 14c auf.

Bevorzugt ist das Kraftfahrzeug 10 und/oder die Steuereinrichtung 18 hierbei eingerichtet, bei Drücken des An/Aus-Bedienelements 14a, die zumindest eine Ambiente-Beleuchtungseinrichtung 12a, 12b, 12c, 12d, 12e, 12f anzuschalten, falls das die zumindest eine Ambiente-Beleuchtungseinrichtung 2a, 12b, 12c, 12d, 12e, 12f beim Drücken des An/Aus-Bedienelements 14a ausgeschaltet ist, und auszuschalten, falls das die zumindest eine Ambiente-Beleuchtungseinrichtung 2a, 12b, 12c, 12d, 12e, 12f beim Betätigen des An/Aus-Bedienelements 14a eingeschaltet ist.

Weiterhin kann das Kraftfahrzeug 10 und/oder die Steuereinrichtung 18 bevorzugt eingerichtet sein, bei Drücken des Farbwahl-Bedienelements 14b die Leuchtfarbe der zumindest einen Ambiente-Beleuchtungseinrichtung 2a, 12b, 12c, 12d, 12e, 12f aus einer vorbestimmten Menge möglicher Leuchtfarben in einer vorgegebenen Reihenfolge zyklisch durchzuwechseln.

Weiterhin kann das Kraftfahrzeug 10 und/oder die Steuereinrichtung 18 bevorzugt eingerichtet sein, bei einem kurzen Drücken des Helligkeit-Bedienelements 14c eine Leuchtstärke der zumindest einen Ambiente-Beleuchtungseinrichtung 2a, 12b, 12c, 12d, 12e, 12f auf einen minimalen Leuchtstärkewert einzustellen und bei einem Gedrückthalten des Helligkeit-Bedienelements 14c eine Leuchtstärke der zumindest einen Ambiente-Beleuchtungseinrichtung 2a, 12b, 12c, 12d, 12e, 12f kontinuierlich bis zu einem maximalen Leuchtstärkenwert zu erhöhen, wobei, wenn die zweite Betätigungsweise beendet oder unterbrochen wird, eine aktueller Leuchtstärke beibehalten wird.

Im Gegensatz zur ersten Bedieneinrichtung 14 ist die zweite Bedieneinrichtung 16 ein, vorzugsweise tragbares, Mobilgerät, bspw. Smartphone wie in Figur 3 exemplarisch dargestellt. Grundsätzlich kann die zweite Bedieneinrichtung 16 bzw. das Mobilgerät allerdings auch ein Mobiltelefon, Tablet-PC oder sonstiges mobiles Terminal sein.

Die zweite Bedieneinrichtung 16 kann bspw. von einem Insassen des Kraftfahrzeugs 10 innerhalb und/oder außerhalb des Kraftfahrzeugs 10 herumtragbar sein und/oder nicht über eine (z. B. direkte) Kabelverbindung mit dem Kraftfahrzeug 10 verbunden sein. Beispielsweise kann die zweite Bedieneinrichtung 16 leicht, mobil und/oder handlich sein. Insbesondere kann die zweite Bedieneinrichtung 16 in dem Kraftfahrzeug 10 nicht fest verbaut sein.

Zum Einstellen der Beleuchtungseinstellungen der zumindest einen Ambiente-Beleuchtungseinrichtung 12a, 12b, 12c, 12d, 12e, 12f kann die zweite Bedieneinrichtung 16 ausgebildet sein, kabellos und/oder drahtlos (z. B. über Funkwellen) mit einer Kommunikationseinrichtung 19 des Kraftfahrzeugs 10 zu kommunizieren. Beispielsweise kann die Kommunikationseinrichtung 19, wie in Figur 1 dargestellt, in die Steuereinrichtung 18 integriert sein. Weiterhin können die zweite Bedieneinrichtung 16 und die Kommunikationseinrichtung 19 des Kraftfahrzeugs 10 ausgebildet sein, mittels eines Kommunikationsstandards miteinander zu kommunizieren. Der Kommunikationsstandard kann bspw. ein Nahbereichs-Kommunikationsstandard, wie bspw. Bluetooth, NFC und/oder RFID, sein. Zudem oder alternativ kann der Kommunikationsstandard ein Mobilfunk-Kommunikationsstandard, wie bspw. UMTS (3G), LTE (4G) und/oder 5G, sein. Bevorzugt ist die zweite Bedieneinrichtung 16 ausgebildet, eine Nutzereingabe betreffend eine der mehreren Beleuchtungseinstellungen (z. B. einen Beleuchtungseinstellungswunsch) kabellos und/oder drahtlos an die Kommunikationseinrichtung 19 zu übermitteln, woraufhin die Steuereinrichtung 18 des Kraftfahrzeugs 10 in Abhängigkeit der übermittelten Nutzereingabe ein Einstellen der zumindest einen Ambiente-Beleuchtungseinrichtung 12a, 12b, 12c, 12d, 12e, 12f vornehmen kann.

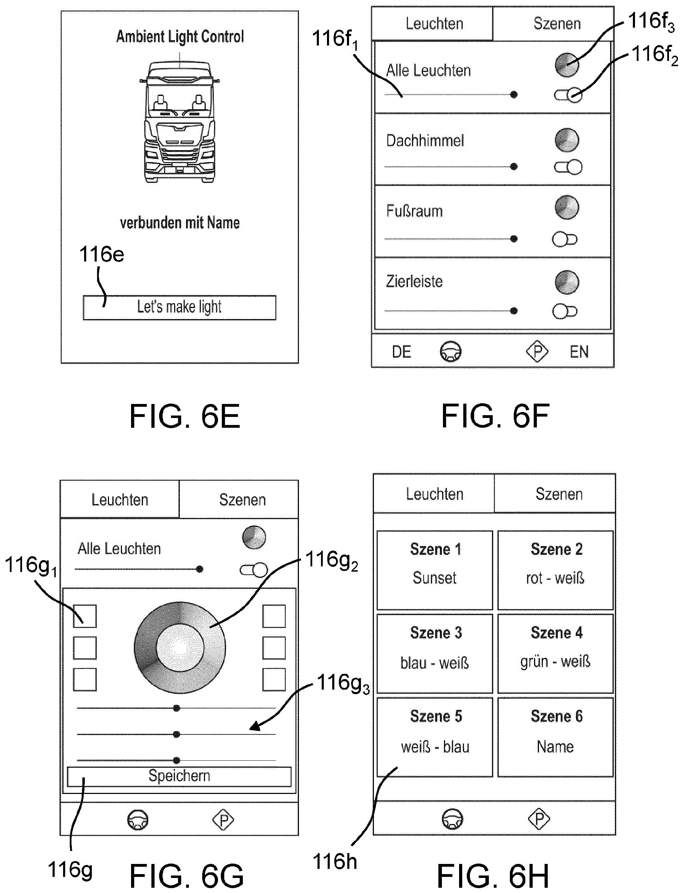

In einer bevorzugten Ausführungsform kann die zweite Bedieneinrichtung 16 eine berührungsempfindliche Anzeigeeinrichtung 16a (z. B. einen Touchscreen), einen Speicher 16b und eine Verarbeitungseinrichtung 16c aufweisen. Weiterhin kann die zweite Bedieneinrichtung 16 eingerichtet sein, auf der Verarbeitungseinrichtung ein in dem Speicher 16b hinterlegtes Anwendungsprogramm (z. B. eine App) auszuführen, das die zweite Bedieneinrichtung 16 dazu veranlasst, auf der Anzeigeeinrichtung 16a mehrere (z. B. virtuelle und/oder digitale) Bedienelemente (vgl. Figur 6F) zur Bedienung der zumindest einen Ambiente-Beleuchtungseinrichtung 12a, 12b, 12c, 12d, 12e, 12f bereitzustellen. Das Anwendungsprogramm kann bspw. durch den Nutzer von einem Server des Kraftfahrzeugherstellers heruntergeladen werden. Ebenso können hierüber vom Kraftfahrzeughersteller Updates für das Anwendungsprogramm bereitgestellt werden.

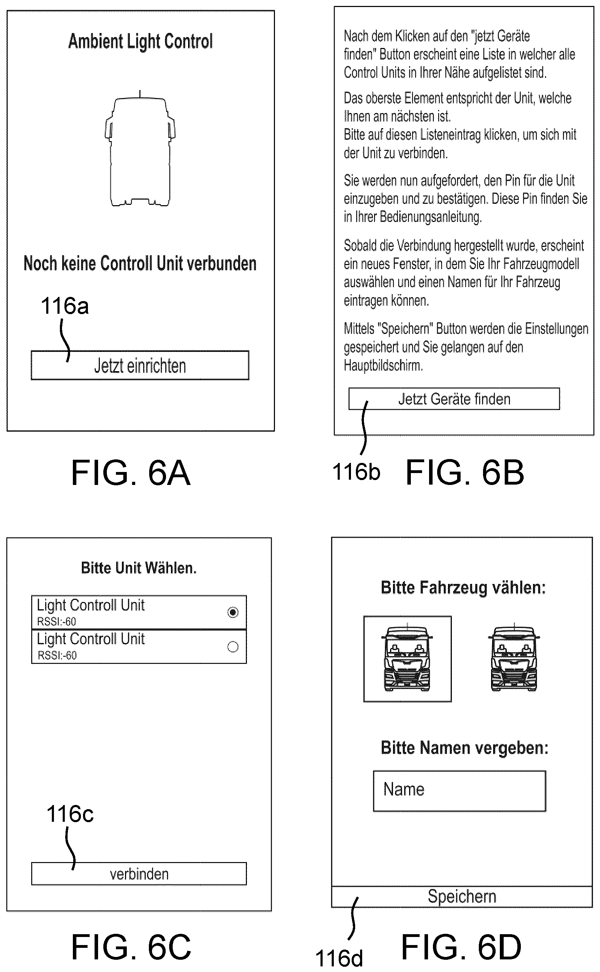

Ein beispielhafte Ausführung des Anwendungsprogramms auf einem Mobilgerät wird im Folgenden unter Bezugnahme auf die Figuren 6A bis 6K beschrieben.

Wie in Figur 6A dargestellt, kann nach einem Starten des Anwendungsprogramms ein Startbildschirm auf der Anzeigeeinrichtung 16a angezeigt werden, der den Nutzer darüber informiert, dass das derzeit keine Steuereinrichtung 18 oder keine Ambiente-Beleuchtungseinrichtung 12a, 12b, 12c, 12d, 12e, 12f des Kraftfahrzeugs 10 mit dem Mobilgerät (z. B. über eine Funkverbindung) verbunden ist.

Durch Betätigen des "Jetzt einrichten" Bedienelements 116a kann dem Nutzer eine kurze Beschreibung über die folgenden Schritte zur Einrichtung der zweiten Bedieneinrichtung auf der Anzeigeeinrichtung 16a dargestellt werden, was beispielhaft in Figur 6B gezeigt ist.

Durch Betätigen des "Jetzt Geräte finden" Bedienelements 116b kann das Mobilgerät dazu veranlasst werden, mittels eines Kommunikationsstandards, wie z. B. Bluetooth, NFC, 4G, 5G, WLAN und/oder RFID, nach in der Umgebung des Mobilgeräts befindlichen Steuereinrichtung 18 oder Ambiente-Beleuchtungseinrichtungen 12a, 12b, 12c, 12d, 12e, 12f zu suchen und die ermittelten Steuereinrichtungen 18 oder Ambiente-Beleuchtungseinrichtungen 12a, 12b, 12c, 12d, 12e, 12f auf der Anzeigeeinrichtung 16a darzustellen. In dem in Figur 6C dargestellten Fall wurden bspw. exemplarisch zwei als "Light Control Unit" bezeichnete Steuereinrichtungen 18 ermittelt. Die ermittelten und/oder angezeigten Steuereinrichtung 18 oder Ambiente-Beleuchtungseinrichtungen 12a, 12b, 12c, 12d, 12e, 12f können dabei grundsätzlich auch in verschiedenen Kraftfahrzeugen angeordnet sein. Beispielsweise können mittels der zweiten Bedieneinrichtung 16 somit auch Ambiente-Beleuchtungseinrichtungen verschiedener Kraftfahrzeuge bedienbar sein. Durch Auswahl einer der ermittelten Steuereinrichtung 18 oder Ambiente-Beleuchtungseinrichtungen 12a, 12b, 12c, 12d, 12e, 12f und durch Betätigen des "Verbinden" Bedienelements 116c (vgl. Figur 6C) kann eine Steuerverbindung mit der ausgewählten Einheit hergestellt werden.

Um einen Bedieneingriff von Unberechtigten zu vermeiden, kann das Mobilgerät ausgebildet sein, eine Autorisierungsabfrage zur Authentifizierung, bspw. eine PIN-Abfrage, auszugeben (nicht dargestellt). Der entsprechende PIN für die jeweilige Steuereinrichtung 18 oder Ambiente-Beleuchtungseinrichtungen 12a, 12b, 12c, 12d, 12e, 12f kann bspw. in einer Bedienungsanleitung des Kraftfahrzeugs 10 hinterlegt sein. Weiterhin kann das Mobilgerät ausgebildet sein, nur bei einer erfolgreichen Authentifizierung (z. B. nach einer Eingabe eines korrekten PINs) eine Verbindung mit der ausgewählten Steuereinrichtung 18 oder Ambiente-Beleuchtungseinrichtungen 12a, 12b, 12c, 12d, 12e, 12f zuzulassen.

Wie in Figur 6D dargestellt, kann nach einem erfolgreichen Verbinden mit einer Steuereinrichtung 18 oder Ambiente-Beleuchtungseinrichtungen 12a, 12b, 12c, 12d, 12e, 12f optional eine Personalisierung dahingehend vorgenommen werden, dass ein Name und ein Icon für das entsprechende Kraftfahrzeug 10 vergeben und/oder ausgewählt werden kann.

Nach Betätigen des "Speichern" Bedienelements 116d ist die Einrichtung des Mobilgeräts beendet und es kann der in Figur 6E dargestellte Hauptbildschirm angezeigt werden.

Durch Betätigen des "Let's make light" Bedienelements 116e auf dem Hauptbildschirm kann in einem Untermenü "Leuchten" dem Nutzer für jede der im vorliegenden Beispiel vorhandenen Ambiente-Beleuchtungseinrichtungen, hier eine als "Dachhimmel" bezeichnete Dachhimmel-Beleuchtungseinrichtung 12a, eine als "Fußraum" bezeichnete Fußraum-Beleuchtungseinrichtung 12b und eine als "Zierleiste" bezeichnete Dashboard-Beleuchtungseinrichtung 12f, eine entsprechende Bedienelementkachel angezeigt werden (vgl. Figur 6F). Zusätzlich kann eine Bedienelementkachel zur gemeinsamen oder gleichzeitigen Bedienung aller Ambiente-Beleuchtungseinrichtungen vorgesehen sein, welche bspw. als "alle Leuchten" bezeichnet sein kann. Jede der Bedienelementkacheln kann neben einem jeweiligen Namen einen Schieber 116f₁ zur Einstellung der Leuchtstärke der jeweiligen Ambiente-Beleuchtungseinrichtung bzw. aller Ambiente-Beleuchtungseinrichtungen, einen Schalter 116f₂ zum Aktivieren und Deaktivieren der jeweiligen Ambiente-Beleuchtungseinrichtung bzw. aller Ambiente-Beleuchtungseinrichtungen und ein Farbwahl-Bedienelement 116f₃ zur Einstellung der Leuchtfarbe der jeweiligen Ambiente-Beleuchtungseinrichtung bzw. aller Ambiente-Beleuchtungseinrichtungen.

Durch Betätigen des Farbwahl-Bedienelements 116f₃ (z. B. der "alle Leuchten" Bedienkachel) kann sich, wie in Figur 6G dargestellt, ein Popup öffnen, aufweisend Direktauswahl-Bedienelemente 116g₁, ein Farbkreis-Bedienelement 116g₂ und ein RGB-Schieber-Bedienelement 116g₃. Durch Betätigen eines der Direktauswahl-Bedienelemente 116g, kann eine der Farbe des Direktauswahl-Bedienelements 116g, entsprechende Leuchtfarbe direkt ausgewählt werden. Alternativ kann die Leuchtfarbe durch Anwählen einer Farbe bzw. eines Farbbereichs auf dem Farbkreis-Bedienelement 116g₂ oder durch Verschieben eines Rotreglers, Grünreglers und/oder Blaureglers des RGB-Schieber-Bedienelements 116g₃ eingestellt werden. Durch Betätigen des "Speichern" Bedienelements 116g kann zum Untermenü "Leuchten" (vgl. Figur vgl. Figur 6F) zurückgekehrt werden.

Weiterhin kann das Anwendungsprogramm das Untermenü "Szenen" aufweisen. Wie in Figur 6H dargestellt, können hierüber vorbestimmte Lichtstimmungen bzw. Lichtszenen über entsprechende Bedienelemente 116h ausgewählt werden. Jede der Lichtstimmungen kann dabei mit einer bestimmten Leuchtfarben-, Leuchtstärke- und/oder Effekteinstellungen jeder der Ambiente-Beleuchtungseinrichtungen 12a, 12b, 12c, 12d, 12e, 12f verknüpft sein, bspw. um dadurch durch das Zusammenspiel aller Ambiente-Beleuchtungseinrichtungen 12a, 12b, 12c, 12d, 12e, 12f Farb- und/oder Helligkeitsverläufe im Innenraum 110 des Kraftfahrzeugs 10 zu erzeugen. Lediglich beispielhafte kann bei Auswählen der Lichtstimmung "Sunset" der Dachhimmel-Beleuchtungseinrichtung 12a ein bestimmter Leuchtstärke- und Leuchtfarbenwert zugewiesen sein, der Fußraum-Beleuchtungseinrichtung 12b ein bestimmter Leuchtstärke- und Leuchtfarbenwert zugewiesen sein und der Dashboard-Beleuchtungseinrichtung 12f ein bestimmter Leuchtstärke- und Leuchtfarbenwert zugewiesen sein, wobei sich bevorzugt die jeweiligen Leuchtstärke- und Leuchtfarbenwerte unterscheiden.

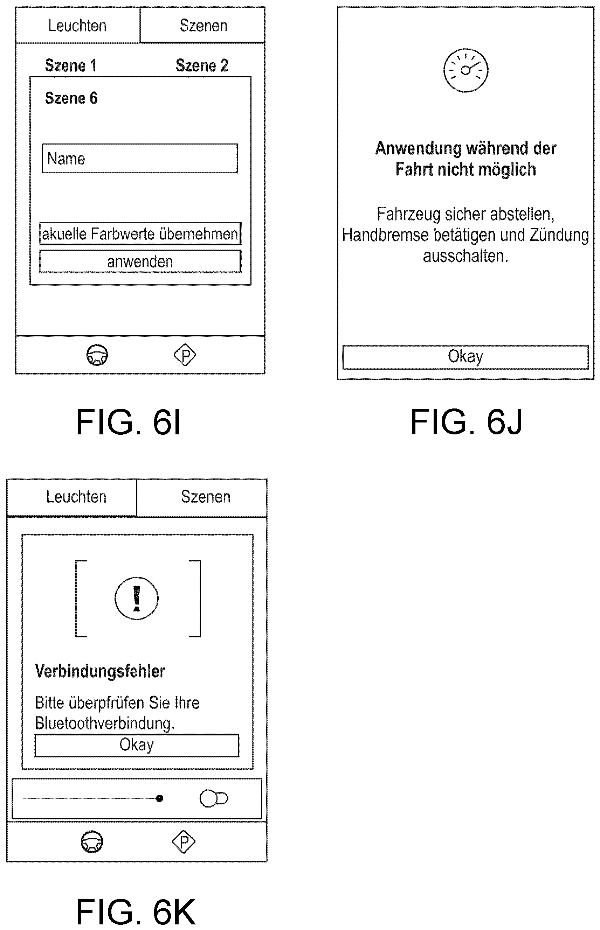

Wie in Figur 6I dargestellt, besteht weiterhin die Möglichkeit eigene Lichtstimmungen zu erstellen und zu speichern bzw. bestehende Lichtstimmungen zu verändern.

Um während eines Fahrbetriebszustands (z. B. während einer Fahrt) des Kraftfahrzeugs 10 eine Ablenkung des Fahrers zu vermeiden, kann das Anwendungsprogramm konfiguriert sein, dass während des Fahrbetriebszustands mittels des Mobilgeräts die zumindest eine Ambiente-Beleuchtungseinrichtung 12a, 12b, 12c, 12d, 12e, 12f nicht einstellbar ist und/oder das Einstellen der zumindest eine Ambiente-Beleuchtungseinrichtung 12a, 12b, 12c, 12d, 12e, 12f gesperrt ist. Beispielsweise kann während des Fahrbetriebszustands der in Figur 6J dargestellte Sperrbildschirm angezeigt werden. Der Umstand, dass ein Fahrbetriebszustand vorliegt, kann bspw. anhand von Bewegungsdaten des Mobilgeräts selbst und/oder anhand dem Mobilgerät von der Steuereinrichtung 18 des Kraftfahrzeugs 10 übermittelter Fahrzeugsensordaten ermittelt werden.

Für den Fall, dass die Verbindung zwischen dem Mobilgerät und der Steuereinrichtung 18 oder Ambiente-Beleuchtungseinrichtungen 12a, 12b, 12c, 12d, 12e, 12f (z. B. kurzzeitig) unterbrochen ist, kann ferner , wie in Figur 6K dargestellt, ein Fehlerbildschirm angezeigt werden.

Grundsätzlich können sowohl mittels der ersten Bedieneinrichtung 14 als auch mittels der zweiten Bedieneinrichtung 16 mehrere der Beleuchtungseinstellungen einstellbar sein. Beispielweise kann sowohl mittels der ersten Bedieneinrichtung 14 als auch mittels der zweiten Bedieneinrichtung 16 Änderungen der Leuchtfarbeneinstellungen, Leuchtstärkeeinstellungen und/oder Effekteinstellungen vorgenommen werden. Bevorzugt ist dabei jedoch vorgesehen, dass mittels der ersten Bedieneinrichtung 14 und der zweiten Bedieneinrichtung 16 jeweils eine unterschiedliche Anzahl der mehreren Beleuchtungseinstellungen einstellbar sind oder eingestellt werden. Beispielsweise kann mittels der ersten Bedieneinrichtung 14 eine erste Anzahl an Beleuchtungseinstellungen und mittels der zweiten Bedieneinrichtung 16 eine zweite Anzahl an Beleuchtungseinstellungen einstellbar sein, wobei sich die erste und zweite Anzahl voneinander unterscheiden.

Beispielweise kann die zweite Bedieneinrichtung 16 eingerichtet sein, dass dadurch alle der mehreren Beleuchtungseinstellungen einstellbar sind, während die erste Bedieneinrichtung 14 eingerichtet sein, dass dadurch nur eine Teilmenge der mehreren Beleuchtungseinstellungen einstellbar sein. Zudem oder alternativ können mittels der ersten Bedieneinrichtung 14 die mehreren Ambiente-Beleuchtungseinrichtungen 12a, 12b, 12c, 12d, 12e, 12f nur miteinander gekoppelt bedienbar sein, während mittels der zweiten Bedieneinrichtung 16 die mehreren Ambiente-Beleuchtungseinrichtungen 12a, 12b, 12c, 12d, 12e, 12f unabhängig voneinander einzeln bedienbar sein können. Zudem oder alternativ kann vorgesehen sein, dass die von der ersten Bedieneinrichtung 14 einstellbare Teilmenge der mehreren Beleuchtungseinstellungen, mittels der zweiten Bedieneinrichtung 16 veränderbar und/oder einstellbar ist. Beispielsweise kann eine Tastenbelegung der ersten Bedieneinrichtung 14 mittels der zweiten Bedieneinrichtung 16 veränderbar und/oder einstellbar sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Kraftfahrzeug
- 11: Instrumententafel
- 12a: Dachhimmel-Beleuchtungseinrichtung
- 12b: Fußraum-Beleuchtungseinrichtung
- 12c: Seitentür-Beleuchtungseinrichtung
- 12d: Zigarettenanzünder-Beleuchtungseinrichtung
- 12e: Getränkehalter-Beleuchtungseinrichtung
- 12f: Dashboard-Beleuchtungseinrichtung
- 13: Dachhimmel
- 14: Erste Bedieneinrichtung
- 14a: An/Aus-Bedienelement
- 14b: Farbwahl-Bedienelement
- 14c: Helligkeit-Bedienelement
- 15: Fußraum
- 16: Zweite erst Bedieneinrichtung
- 16a: Anzeigeeinrichtung
- 16b: Speicher
- 16c: Verarbeitungseinrichtung
- 17a: Fahrerseitigen Fahrzeugtür
- 17b: Beifahrerseitige Fahrzeugtür
- 18: Steuereinrichtung
- 19: Kommunikationseinrichtung
- 110: Innenraum
- 112: Lichtleiste
- 113: Warn-Leuchtelement
- 114: Kabelverbindung
- 116a: "Jetzt einrichten" Bedienelement
- 116b: "Jetzt Geräte finden" Bedienelement
- 116c: "Verbinden" Bedienelement
- 116d: "Speichern" Bedienelements
- 116e: "Let's make light" Bedienelement
- 116f₁: Schieber
- 116f₂: Schalter
- 116f₃: Farbwahl-Bedienelement
- 116g: "Speichern" Bedienelement
- 116g₁: Direktauswahl-Bedienelement
- 116g₂: Farbkreis-Bedienelement
- 116g₃: RGB-Schieber-Bedienelement
- 116h: Bedienelement

## Patentansprüche

1. Kraftfahrzeug (10), vorzugsweise Nutzfahrzeug, aufweisend:
zumindest eine Ambiente-Beleuchtungseinrichtung (12a, 12b, 12c, 12d, 12e, 12f), vorzugsweise zur indirekten Beleuchtung eines Innenraums des Kraftfahrzeugs (10) und/oder zur Hervorhebung einer Kontur wenigstens einer Interiorkomponente des Kraftfahrzeugs (10);
eine erste Bedieneinrichtung (14) zur Bedienung der zumindest einen Ambiente-Beleuchtungseinrichtung (12a, 12b, 12c, 12d, 12e, 12f), wobei die erste Bedieneinrichtung (14) in dem Kraftfahrzeug (10), vorzugsweise fest, verbaut ist; und
eine zweite Bedieneinrichtung (16) zur Bedienung der zumindest einen Ambiente-Beleuchtungseinrichtung (12a, 12b, 12c, 12d, 12e, 12f), wobei die zweite Bedieneinrichtung (16) ein, vorzugsweise tragbares, Mobilgerät, vorzugsweise ein Mobiltelefon, ein Smartphone oder ein Tablet-PC, ist.

2. Kraftfahrzeug (10), nach Anspruch 1, wobei
die zweite Bedieneinrichtung (16) tragbar ist und/oder in dem Kraftfahrzeug (10) nicht fest verbaut ist; und/oder
die zweite Bedieneinrichtung (16) ausgebildet ist, kabellos, vorzugsweise über einen Kommunikationsstandard, mit einer Kommunikationseinrichtung (19) des Kraftfahrzeugs (10) zu kommunizieren, vorzugsweise um kabellos eine Bedieneingabe eines Nutzers betreffend die zumindest eine Ambiente-Beleuchtungseinrichtung (12a, 12b, 12c, 12d, 12e, 12f) an die Kommunikationseinrichtung (19) zu übertragen; und/oder
die zweite Bedieneinrichtung (16) ausgebildet ist, eine Autorisierungsabfrage, vorzugsweise eine PIN-Abfrage, zur Authentifizierung an einen Nutzer auszugeben, und nur bei einer erfolgreichen Authentifizierung eine Bedienung der zumindest einen Ambiente-Beleuchtungseinrichtung (12a, 12b, 12c, 12d, 12e, 12f) mittel der zweiten Bedieneinrichtung (16) zuzulassen.

3. Kraftfahrzeug (10), nach einem der vorherigen Ansprüche, wobei:
die zweite Bedieneinrichtung (16) eine Anzeigeeinrichtung (16a), einen Speicher (16b) und eine Verarbeitungseinrichtung (16c) aufweist; und
die zweite Bedieneinrichtung (16) eingerichtet ist, auf der Verarbeitungseinrichtung (16c) ein in dem Speicher (16b) hinterlegtes Anwendungsprogramm auszuführen, das die zweite Bedieneinrichtung (16) dazu veranlasst, auf der Anzeigeeinrichtung (16a) mehrere, vorzugsweise virtuelle, Bedienelemente zur Bedienung der zumindest einen Ambiente-Beleuchtungseinrichtung (12a, 12b, 12c, 12d, 12e, 12f) anzuzeigen.

4. Kraftfahrzeug (10), nach einem der vorherigen Ansprüche, wobei:
die erste Bedieneinrichtung (14) nicht zerstörungsfrei aus dem Kraftfahrzeug (10) entfernbar ist; und/oder
die erste Bedieneinrichtung (14) mindestens ein mechanisches Bedienelement aufweist; und/oder
die erste Bedieneinrichtung (14) an einer Instrumententafel (11) des Kraftfahrzeugs (10) oder an einem Innenverkleidungsteil des Kraftfahrzeugs (10) angeordnet ist.

5. Kraftfahrzeug (10), nach einem der vorherigen Ansprüche, wobei:
die erste Bedieneinrichtung (14), vorzugsweise ausschließlich, folgende Bedienelemente (14a, 14b, 14c), vorzugsweise Taster, zur Bedienung der zumindest einen Ambiente-Beleuchtungseinrichtung (12a, 12b, 12c, 12d, 12e, 12f) aufweist:
- ein An/Aus-Bedienelement (14a), mittels dessen die zumindest eine Ambiente-Beleuchtungseinrichtung (12a, 12b, 12c, 12d, 12e, 12f) einschaltbar und ausschaltbar ist; und/oder
- ein Farbwahl-Bedienelement (14b), mittels dessen eine Leuchtfarbe der zumindest einen Ambiente-Beleuchtungseinrichtung (12a, 12b, 12c, 12d, 12e, 12f) einstellbar ist; und/oder
- ein Helligkeit-Bedienelement (14c), mittels dessen eine Leuchtstärke der zumindest einen Ambiente-Beleuchtungseinrichtung (12a, 12b, 12c, 12d, 12e, 12f) einstellbar.

6. Kraftfahrzeug (10), nach Anspruch 5, wobei:
das Kraftfahrzeug (10) eingerichtet ist, dass:
bei Betätigen, vorzugsweise Drücken, des An/Aus-Bedienelements (14a), die zumindest eine Ambiente-Beleuchtungseinrichtung (12a, 12b, 12c, 12d, 12e, 12f) angeschaltet wird, falls das die zumindest eine Ambiente-Beleuchtungseinrichtung (12a, 12b, 12c, 12d, 12e, 12f) beim Betätigen des An/Aus-Bedienelements (14a) ausgeschaltet ist, und ausgeschaltet wird, falls das die zumindest eine Ambiente-Beleuchtungseinrichtung (12a, 12b, 12c, 12d, 12e, 12f) beim Betätigen des An/Aus-Bedienelements (14a) eingeschaltet ist; und/oder
bei Betätigen, vorzugsweise Drücken, des Farbwahl-Bedienelements (14b) die Leuchtfarbe der zumindest einen Ambiente-Beleuchtungseinrichtung (12a, 12b, 12c, 12d, 12e, 12f) aus einer vorbestimmten Menge möglicher Leuchtfarben in einer vorgegebenen Reihenfolge durchgewechselt werden, vorzugsweise zyklisch; und/oder
bei einer ersten Betätigungsweise, vorzugsweise ein kurzes Drücken, des Helligkeit-Bedienelements (14c) eine Leuchtstärke der zumindest einen Ambiente-Beleuchtungseinrichtung (12a, 12b, 12c, 12d, 12e, 12f) auf einen minimalen Leuchtstärkewert eingestellt wird und bei einer zweiten Betätigungsweise, vorzugsweise ein Gedrückthalten, des Helligkeit-Bedienelements (14c) eine Leuchtstärke der zumindest einen Ambiente-Beleuchtungseinrichtung (12a, 12b, 12c, 12d, 12e, 12f), vorzugsweise kontinuierlich, bis zu einem maximalen Leuchtstärkenwert erhöht wird, wobei, wenn die zweite Betätigungsweise beendet oder unterbrochen wird, eine aktueller Leuchtstärke beibehalten wird.

7. Kraftfahrzeug (10), nach einem der vorherigen Ansprüche, wobei:
die zumindest eine Ambiente-Beleuchtungseinrichtung (12a, 12b, 12c, 12d, 12e, 12f) mehrere Beleuchtungseinstellungen, vorzugsweise mehrere Leuchtfarbeneinstellungen, mehrere Leuchtstärkeeinstellungen und/oder mehrere Effekteinstellungen, aufweist; und
mittels der ersten Bedieneinrichtung (14) und der zweiten Bedieneinrichtung (16) jeweils eine unterschiedliche Anzahl der mehreren Beleuchtungseinstellungen einstellbar sind oder eingestellt werden.

8. Kraftfahrzeug (10), nach Anspruch 7, wobei:
mittels der zweiten Bedieneinrichtung (16) alle der mehreren Beleuchtungseinstellungen einstellbar sind oder eingestellt werden; und mittels der ersten Bedieneinrichtung (14) nur eine Teilmenge der mehreren Beleuchtungseinstellungen einstellbar ist oder eingestellt werden; und/oder
mittels der ersten Bedieneinrichtung (14) die zumindest eine Ambiente-Beleuchtungseinrichtung (12a, 12b, 12c, 12d, 12e, 12f) nur an- und ausschaltbar ist und/oder nur bestimmte Leuchtfarbeneinstellungen einstellbar sind und/oder nur bestimmte Leuchtstärkeeinstellungen einstellbar sind; und/oder
das Kraftfahrzeug (10) eine Steuereinrichtung (18) aufweist, die eingerichtet ist, in Abhängigkeit einer mittels der ersten Bedieneinrichtung (14) und/oder zweiten Bedieneinrichtung (16) erfassten Nutzereingabe die zumindest eine Ambiente-Beleuchtungseinrichtung (12a, 12b, 12c, 12d, 12e, 12f) anzusteuern, eine der mehreren Beleuchtungseinstellungen einzustellen.

9. Kraftfahrzeug (10), nach einem der Ansprüche 7 oder 8, wobei:
während eines Fahrbetriebszustands des Kraftfahrzeugs (10), in dem vorzugsweise eine Kraftfahrzeugzündung des Kraftfahrzeugs (10) aktiviert und/oder eine Parkbremse des Kraftfahrzeugs (10) nicht eingelegt ist, das Kraftfahrzeug (10) eingerichtet ist:
- dass mittels der zweiten Bedieneinrichtung (16) keine der mehreren Beleuchtungseinstellungen einstellbar ist und/oder das Einstellen der mehreren Beleuchtungseinstellungen über die zweite Bedieneinrichtung (16) gesperrt ist; und/oder
- dass mittels der ersten Bedieneinrichtung (14) nur eine vorbestimmte Auswahl an Beleuchtungseinstellungen der Teilmenge der mehreren Beleuchtungseinstellungen und/oder nicht alle Beleuchtungseinstellungen der Teilmenge der mehreren Beleuchtungseinstellungen einstellbar sind; und/oder
- eine maximale Leuchtstärke der zumindest einen Ambiente-Beleuchtungseinrichtung (12a, 12b, 12c, 12d, 12e, 12f) auf einen Wert zu begrenzen, der niedriger ist als während eines Parkzustands des Kraftfahrzeugs (10), in dem vorzugsweise die Kraftfahrzeugzündung des Kraftfahrzeugs (10) deaktiviert und/oder die Parkbremse des Kraftfahrzeugs (10) eingelegt ist.

10. Kraftfahrzeug (10), nach einem der vorherigen Ansprüche, wobei:
die zweite Bedieneinrichtung (16) ausgebildet ist, kabellos, vorzugsweise mittels Bluetooth, mit einer weiteren Kommunikationseinrichtung eines weiteren Kraftfahrzeugs zu kommunizieren; und/oder
mittels der zweiten Bedieneinrichtung (16) zumindest eine weitere Ambiente-Beleuchtungseinrichtung eines weiteren Kraftfahrzeugs bedienbar ist.

11. Kraftfahrzeug (10), nach einem der vorherigen Ansprüche, wobei:
die zumindest eine Ambiente-Beleuchtungseinrichtung (12a, 12b, 12c, 12d, 12e, 12f) wenigstens eine der folgenden Ambiente-Beleuchtungseinrichtungen (12a, 12b, 12c, 12d, 12e, 12f) aufweist:
- eine Dachhimmel-Beleuchtungseinrichtung (12a), die vorzugsweise in einem Bereich eines Dachhimmels (13) des Kraftfahrzeugs (10) angeordnet ist und ausgebildet ist, den Dachhimmel (13) zu beleuchten;
- Fußraum-Beleuchtungseinrichtung (12b), die vorzugsweise in einem Bereich eines Fußraums (15) des Kraftfahrzeugs (10) angeordnet ist und ausgebildet ist, den Fußraum (15) zu beleuchten;
- eine Seitentür-Beleuchtungseinrichtung (12c), die vorzugsweise an einer Fahrzeugtür (17a, 17b) des Kraftfahrzeugs (10) angeordnet ist und ausgebildet ist, die Fahrzeugtür (17a, 17b) zu beleuchten;
- eine Zigarettenanzünder-Beleuchtungseinrichtung (12d), die vorzugsweise in einem Bereich eines Zigarettenanzünders des Kraftfahrzeugs (10) angeordnet ist und ausgebildet ist, den Zigarettenanzünder zu beleuchten;
- eine Getränkehalter-Beleuchtungseinrichtung (12e), die vorzugsweise in einem Bereich eines Getränkehalters des Kraftfahrzeugs (10) angeordnet ist und ausgebildet ist, den Getränkehalter zu beleuchten; und
- eine Dashboard-Beleuchtungseinrichtung (12f), die vorzugsweise an einer Instrumententafel (11) des Kraftfahrzeugs (10), besonders bevorzugt oberhalb eines Handschuhfachs (11a) der Instrumententafel (11) angeordnet ist und ausgebildet ist, eine Kontur der Instrumententafel (11) hervorzuheben.

12. Kraftfahrzeug (10), nach einem der vorherigen Ansprüche, wobei:
die zumindest eine Ambiente-Beleuchtungseinrichtung (12a, 12b, 12c, 12d, 12e, 12f) mindestens eine, vorzugsweise streifenförmige und/oder linienförmige, Lichtleiste (112) aufweist, vorzugsweise mit mehreren entlang einer Linie angeordneten Leuchtquellen; und/oder
die zumindest eine Ambiente-Beleuchtungseinrichtung (12a, 12b, 12c, 12d, 12e, 12f) ausgebildet ist, in verschiedenen, vorzugsweise in mindestens drei verschiedenen, besonders bevorzugt in mindestens fünf verschiedenen, Leuchtfarben zu leuchten; und/oder
die zumindest eine Ambiente-Beleuchtungseinrichtung (12a, 12b, 12c, 12d, 12e, 12f) mehrere verschiedenfarbige Leuchtdioden aufweist; und/oder
die zumindest eine Ambiente-Beleuchtungseinrichtung (12a, 12b, 12c, 12d, 12e, 12f) mindestens ein als Diffusor wirkendes Lichtaustrittselement aufweist.

13. Kraftfahrzeug (10), nach einem der vorherigen Ansprüche, wobei:
die zumindest eine Ambiente-Beleuchtungseinrichtung (12a, 12b, 12c, 12d, 12e, 12f) mehrere Ambiente-Beleuchtungseinrichtungen (12a, 12b, 12c, 12d, 12e, 12f) aufweist; und
mittels der ersten Bedieneinrichtung (14) die mehreren Ambiente-Beleuchtungseinrichtungen (12a, 12b, 12c, 12d, 12e, 12f) nur miteinander gekoppelt bedienbar sind; und
mittels der zweiten Bedieneinrichtung (16) die mehreren Ambiente-Beleuchtungseinrichtungen (12a, 12b, 12c, 12d, 12e, 12f) unabhängig voneinander einzeln bedienbar sind.

14. Kraftfahrzeug (10), nach Anspruch 13, wobei:
mittels der mehreren Ambiente-Beleuchtungseinrichtungen (12a, 12b, 12c, 12d, 12e, 12f) verschiedene Lichtstimmungen, vorzugsweise eine Sonnenaufgangs-Lichtstimmung und/oder eine Waldambiente-Lichtstimmung, erzeugbar sind, vorzugsweise dadurch dass, die mehrere Ambiente-Beleuchtungseinrichtungen (12a, 12b, 12c, 12d, 12e, 12f) zumindest teilweise voneinander unterschiedliche Leuchtfarbeneinstellungen und/oder Leuchtstärkeeinstellungen aufweisen; und/oder
mittels der zweiten Bedieneinrichtung (16) verschiedene Lichtstimmungen der mehreren Ambiente-Beleuchtungseinrichtungen einstellbar sind.

15. Kraftfahrzeug (10) nach einem der vorherigen Ansprüche, wobei:
das Kraftfahrzeug (10) ein Nutzfahrzeug, vorzugsweise ein Lastkraftwagen oder ein Sattelzugfahrzeug, ist; und/oder
das Kraftfahrzeug (10) ein Fahrerhaus aufweist; und/oder
die zumindest eine Ambiente-Beleuchtungseinrichtung (12a, 12b, 12c, 12d, 12e, 12f) eine Fahrerhaus-Ambiente-Beleuchtungseinrichtung, vorzugsweise zur indirekten Beleuchtung eines Fahrerhauses des Kraftfahrzeugs (10) und/oder zur Hervorhebung einer Kontur wenigstens einer Interiorkomponente des Fahrerhauses, ist.
